# FASCICULE DE BREVET EUROPEEN

(11) **EP 2 300 137 B1**
(45) Date de publication et mention de la délivrance du brevet: **11.05.2022**
(21) Numéro de dépôt: 09737052.2
(22) Date de dépôt: 13.07.2009
(51) Int. Cl.: G01N 15/14

(54) **PROCEDE ET DISPOSITF DE LECTURE D'UNE EMULSION**
VERFAHREN UND VORRICHTUNG ZUM UNTERSUCHEN EINER EMULSION
METHOD AND DEVICE FOR READING AN EMULSION

(30) Priorité: 15.07.2008 FR 0804024
(43) Date de publication de la demande: 30.03.2011
(73) Titulaire: Sorbonne Université, 75006 Paris (FR); Centre National de la Recherche Scientifique (C.N.R.S.), 75794 Paris Cedex 16 (FR); Université Paris Cité, 75006 Paris (FR); Ecole Supérieure de Physique et de Chimie Industrielles de la Ville de Paris, 75005 Paris (FR)
(72) Inventeur: BAUDRY, Jean, F-75011 Paris (FR); SYLVESTRE, Julien, F-75002 Paris (FR); BIBETTE, Jérôme, F-75005 Paris (FR); BOITARD, Laurent, F-75013 Paris (FR); BREMOND, Nicolas, F-75005 Paris (FR)
(74) Mandataire: Grosset-Fournier, Chantal Catherine
(86) Numéro de dépôt international: PCT/FR2009/051396
(87) Numéro de publication internationale: WO 2010/007307

(56) Documents cités:
- WO-A-2008/121342
- WO-A2-2007/149432
- FR-A1- 2 873 018
- US-A1- 2002 058 332
- US-A1- 2002 198 928
- US-A1- 2005 221 339
- US-A1- 2006 078 888
- US-A1- 2007 054 119
- US-A1- 2008 124 726
- US-B1- 6 687 419
- US-B2- 7 307 104
- KENG-SHIANG HUANG ET AL: "Calcium alginate microcapsule generation on a microfluidic system fabricated using the optical disk process; Calcium alginate microcapsule generation on a microfluidic system" 1 août 2007 (2007-08-01), JOURNAL OF MICROMECHANICS & MICROENGINEERING, INSTITUTE OF PHYSICS PUBLISHING, BRISTOL, GB, PAGE(S) 1428 - 1434 , XP020120175 ISSN: 0960-1317 le document en entier
- KOBAYASHI I ET AL: "Formulation of monodisperse emulsions using submicron-channel arrays" COLLOIDS AND SURFACES. A, PHYSICACHEMICAL AND ENGINEERING ASPECTS, ELSEVIER, AMSTERDAM, NL, vol. 296, no. 1-3, 15 mars 2007 (2007-03-15), pages 285-289, XP022670909 ISSN: 0927-7757 [extrait le 2007-02-14]
- Jasna Brujic: "experimental study of stress transmission through particulate matter", Universtiy of cambridge, cavendis laboratory , 31 January 2004 (2004-01-31), Retrieved from the Internet: URL:http://s3.amazonaws.com/academia.edu.d ocuments/30741147/10.1.1.105.5880.pdf?AWSA ccessKeyId=AKIAJ56TQJRTWSMTNPEA&Expires=14 78864177&Signature=M3dGuJ35CW%2FiA5zqF5a4d zfsDy0%3D&response-content-disposition=inl ine%3B%20filename%3DExperimental_study_of_ stress_transmissio.pdf [retrieved on 2016-11-11]
- REGINALD BEER ET AL: "on-chip, real-time, single-copy polymerase chain reaction in picoliter droplets", ANA. CHEM., vol. 79, no. 22, 10 November 2007 (2007-11-10), pages 8471-8474,

## Description

### Domaine technique

La présente invention concerne un procédé de lecture d'une émulsion. Elle concerne aussi un dispositif de lecture d'une émulsion mettant en œuvre le procédé selon l'invention. Dans ce document, on entend de manière générale par « lecture d'une émulsion » une extraction d'informations à partir de cette émulsion.

Des exemples d'application de l'invention sont de manière non limitative la détection et/ou le tri de microgouttes pouvant jouer le rôle de microréacteurs chimiques ou biologiques ou pouvant contenir des cellules ou des molécules spécifiques, dans des domaines tels que l'expression de gènes ou le diagnostic.

### Etat de la technique antérieure

Les gouttes d'eau d'une émulsion inverse eau dans huile constituent des micro-compartiments pouvant jouer le rôle de microréacteurs chimiques ou biochimiques indépendants et permettant de réaliser de très nombreuses réactions en parallèle.

Un premier type de réaction concerne l'expression d'un gène unique par goutte et le domaine de l'évolution dirigée. On part d'une banque de gènes codants par exemple pour des variantes d'une enzyme, on exprime ces gènes et on trie les gouttes sur la base de l'activité de ces variantes d'enzyme (par exemple, par fluorescence). Deux techniques ont été décrites qui permettent le tri à haut débit de ces banques de gouttes : la microfluidique et la cytométrie de flux. Ces techniques sont complexes, avec la nécessité d'un expérimentateur et d'un matériel spécialisé. La microfluidique est encore au stade du développement et un Trieur de Cellules Activé par Fluorescence (ou FACS pour « Fluorescence Activated Cell Sorter ») coûte plusieurs centaines de milliers d'euros. Lors des expériences utilisant un FACS, des émulsions doubles eau dans huile dans eau sont utilisées afin d'avoir une phase continue aqueuse et ceci complique notablement la formulation. Les débits maximaux qui sont obtenus avec ces techniques de FACS ou de microfluidique qui trient les gouttes une par une sont de 1000 à 10000 gouttes par seconde. Pour le tri de banques génomiques, les débits atteints par ces techniques actuelles sont donc insuffisants.

Un deuxième domaine d'application des émulsions considérées comme des microréacteurs est le diagnostic et plus généralement la détection de molécules. Là encore, le débit est fondamental, car c'est lui qui va fixer la sensibilité du test.

La demande de brevet US 2008/0124726 décrit une méthode d'analyse spectrophotographique de cellules incluses dans des gouttelettes d'une émulsion. Des vésicules qui sont contenues dans une émulsion fluide sont mises à la disposition du système d'analyse sous forme monodimensionnelle ou bidimensionnelle. Dans le cas où les cellules sont disposées sous forme bidimensionnelle, il est indiqué qu'un balayage bidimensionnel est effectué par des moyens de détection incluant un laser ou d'autres moyens d'illumination et CDD, confocal ou déflexifs de collecte de lumière.

La demande de brevet US 2002/0058332 décrit notamment des moyens pour détecter et trier des cellules contenues dans une émulsion. Le détecteur est un microscope couplé à des moyens de traitement ou d'amélioration d'image. Par exemple les molécules peuvent être triées par tailles ou masse moléculaire.

La demande de brevet US 2006/0078888 décrit une méthode pour isoler des éléments génétiques codant un produit génique ayant une activité souhaitée comprenant les étapes :
(a) Compartimenter les éléments génétiques dans des microcapsules
(b) Trier les éléments génétiques qui expriment un produit génique ayant l'activité souhaitée ;
dans lequel au moins une étape est sous contrôle microfluidique.

La demande de brevet US 2005/0221339 décrit une méthode pour identifier des composés d'un répertoire de composés ayant une activité souhaitée comprenant les étapes :
(a)Compartimenter les composés dans des microcapsules ;
(b)Identifier les composés ayant l'activité souhaitée ;
dans lequel au moins une étapes ou les deux étapes (a) et (b) sont sous contrôle microfluidique.

La demande de brevet US 2007/0054119 décrit une méthode pour former des particules dans une émulsion dans laquelle des gouttelettes de l'émulsion sont solidifiées par usage d'une réaction chimique, formant ainsi une coquille enserrant une partie du liquide interne.

Le brevet US 7,307,104 décrit un procédé pour former une émulsion en utilisant une technologie par micro canal dans laquelle un procédé de solidification peut être produit.

La demande de brevet US 2002/0198928 décrit un procédé pour trier des particules, basé sur une adhérence sélective des particules à des grains de métal formés dans une couche sensible à la lumière contenant un composé métallique qui peut être rendu photosensible par irradiation de la couche par de la lumière et le développement de la couche photosensible.

Le mémoire de thèse de Jasna Brujic daté de février 2004 de l'Université de Cambridge, intitulé « Expérimental Study of Stress Transmission Though Particulate Matter » vise à étudier des particules sous contraintes. Les propriétés mécaniques d'une émulsion de gouttelettes d'huile dans l'eau, comprimée dans une cellule d'analyse sert de système modèle. Il est décrit un procédé et un dispositif d'analyse structurale des émulsions sous contraintes, les gouttelettes de l'émulsion étant identiques, interdépendantes, inertes et bloquées dans toutes les directions. Le procédé décrit permet de reconstruire une image tridimensionnelle de l'émulsion à partir d'acquisition d'images bidimensionnelles le long d'un axe.

Le but de la présente invention est de proposer un procédé et un dispositif de lecture d'une émulsion plus rapide que ceux de l'état de l'art.

### Exposé de l'invention

Dans un mode de réalisation, l'invention concerne un procédé de lecture d'une émulsion comprenant :
- une acquisition d'images partielles de l'émulsion au cours d'au moins un balayage de l'émulsion par un système optique, dans lequel les gouttes de l'émulsion ne bougent pas pendant le balayage,
- une construction d'une image de l'émulsion à partir des images partielles de l'émulsion acquises au cours dudit au moins un balayage,
caractérisé en ce que :
- l'émulsion comprend des gouttes d'eau et une phase continue d'huile qui entoure les gouttes,
- les gouttes de l'émulsion forment un solide colloïdal,
- ledit balayage de l'émulsion est bidimensionnel et ladite image est bidimensionnelle,
pour l'extraction d'informations à partir de cette émulsion,
chaque goutte constituant un réservoir isolé des autres gouttes et pouvant jouer le rôle de microréacteurs biologiques ou pouvant contenir des cellules ou des molécules spécifiques, et
le procédé de lecture comprenant en outre un suivi dans le temps d'une réaction chimique ou biologique se déroulant dans au moins une des gouttes, ledit suivi comprenant une réitération des étapes de balayage et de construction.

Dans un autre mode de réalisation l'invention concerne un procédé de lecture d'une émulsion comprenant :
- une acquisition d'images partielles de l'émulsion au cours d'au moins un balayage de l'émulsion par un système optique, dans lequel les gouttes de l'émulsion ne bougent pas pendant le balayage,
- une construction d'une image de l'émulsion à partir des images partielles de l'émulsion acquises au cours dudit au moins un balayage,
caractérisée en ce que :
- l'émulsion comprenant des gouttes d'eau et une phase continue d'huile qui entoure les gouttes,
- les gouttes de l'émulsion stockée dans un logement forment une monocouche de gouttes, dans laquelle chaque goutte est enserrée entre deux lames parallèles et durant le balayage de l'émulsion, et où les gouttes de l'émulsion forment un solide colloïdal,
- ledit balayage de l'émulsion est bidimensionnel et ladite image est bidimensionnelle,
pour l'extraction d'informations à partir de cette émulsion, chaque goutte constituant un réservoir isolé des autres gouttes et pouvant jouer le rôle de microréacteurs biologiques ou pouvant contenir des cellules ou des molécules spécifiques, et
le procédé de lecture comprenant en outre un suivi dans le temps d'une réaction chimique ou biologique se déroulant dans au moins une des gouttes, ledit suivi comprenant une réitération des étapes de balayage et de construction.

Dans un autre mode de réalisation l'invention concerne un procédé de lecture d'une émulsion comprenant :
- une acquisition d'images partielles de l'émulsion au cours d'au moins un balayage de l'émulsion par un système optique dans lequel les gouttes de l'émulsion ne bougent pas pendant le balayage
- une construction d'une image bidimensionnelle de l'émulsion à partir des images partielles de l'émulsion acquises au cours dudit au moins un balayage,
caractérisé en ce que :
- l'émulsion comprend des gouttes d'eau et une phase continue d'huile qui entoure les gouttes,
- la phase continue est solide lors du balayage,
- ledit balayage de l'émulsion est bidimensionnel et ladite image est bidimensionnelle,
pour l'extraction d'informations à partir de cette émulsion, chaque goutte constituant un réservoir isolé des autres gouttes et pouvant jouer le rôle de microréacteurs biologiques ou pouvant contenir des cellules ou des molécules spécifiques, et
le procédé de lecture comprenant en outre un suivi dans le temps d'une réaction chimique ou biologique se déroulant dans au moins une des gouttes, le dit suivi comprenant une réitération des étapes de balayage et de construction.

L'invention concerne aussi un dispositif de lecture d'une émulsion de gouttes d'eau dans une phase continue d'huile comprenant des gouttes et une phase continue qui entoure les gouttes, ledit dispositif comprenant :
- un logement pour recevoir l'émulsion,
- un système optique, dont la caméra acquiert des images partielles de l'émulsion,
- des moyens pour effectuer un balayage bidimensionnel de l'émulsion par le système optique,
caractérisé en ce qu'il comprend :
- des moyens pour construire une image bidimensionnelle de l'émulsion à partir des images partielles acquises au cours du balayage bidimensionnel de l'émulsion,
- des moyens pour figer les gouttes lors du balayage,
pour l'extraction d'informations à partir de cette émulsion, chaque goutte constituant un réservoir isolé des autres gouttes et pouvant jouer le rôle de microréacteurs biologiques ou pouvant contenir des cellules ou des molécules spécifiques et
le dispositif comprend en outre des moyens pour suivre dans le temps une réaction chimique ou biologique se déroulant dans au moins une des gouttes, ledit suivi comprenant une réitération des étapes de balayage et de construction.

L'émulsion comprend une phase continue entourant les gouttes. La phase continue comprend de préférence de l'huile, et les gouttes comprennent de préférence de l'eau.

L'émulsion peut être une émulsion inverse de gouttes d'eau dans une phase continue d'huile, une émulsion directe de gouttes d'huile dans une phase continue d'eau, une émulsion double de gouttes d'eau dans des gouttes d'huile dans une phase continue d'eau, ou une émulsion double de gouttes d'huile dans des gouttes d'eau dans une phase continue d'huile..

De préférence, les gouttes ne bougent pas pendant le balayage, c'est-à-dire que l'on fige les gouttes pendant le balayage.

De préférence, on dit que les gouttes sont figées ou ne bougent pas pendant un balayage si pendant ce balayage chaque goutte se déplace dans l'émulsion d'une distance inférieure à son diamètre :
- dans le cas de la phase continue solidifiée décrit par la suite, ce déplacement est nul, et
- dans le cas d'un réseau bidimensionnel de gouttes décrit par la suite, ce déplacement dépend de la fraction volumique des gouttes dans l'émulsion et est quasiment nul (solide colloïdal) lorsque cette fraction volumique dépasse un seuil typiquement égal à 60%.

En particulier, lorsque l'on réitère plusieurs fois de façon périodique le balayage de l'émulsion par exemple pour construire de façon périodique l'image bidimensionnelle de la goutte ou pour faire un suivi temporel, les gouttes sont dites figées si pendant une période d'itération du balayage chaque goutte se déplace dans l'émulsion d'une distance inférieure à son diamètre.

La phase continue est de préférence solide lors du balayage, de préférence à température ambiante. Ainsi, les gouttes de l'émulsion peuvent être figées pendant le balayage en solidifiant la phase continue qui les entoure. Dans cette variante, on solidifie la phase continue afin de figer les gouttes à l'intérieur de la phase continue solidifiée.

La phase continue peut avoir une température de liquéfaction supérieure à 37°C, de préférence supérieure à 40°C, plus précisément de préférence supérieure à 50°C.

Durant le balayage de l'émulsion, l'émulsion est de préférence maintenue à une température inférieure à la température de liquéfaction de la phase continue. Ainsi, dans cette variante, la phase continue peut être solide lors du balayage selon sa température.

Dans d'autres variantes, pour solidifier la phase continue, cette phase continue peut être solidifiée par réticulation, par exemple :
- en utilisant une phase continue qui réticule lorsqu'elle est soumise à un rayonnement par exemple à un rayonnement ultra violet, et en soumettant cette phase continue à tel rayonnement avant le balayage, comme par exemple la résine époxy UV nommée NOA60 de chez Norland Optical, ou encore un mélange comprenant 96% en poids d'ethyleneglycol dimethacrylate(EGDMA) et 4% en poids de photoinitiateur 1-hydroxycyclohexyl phenyl ketone (HCPK), ou
- en utilisant une phase continue qui comprend un mélange de deux composants qui réticulent avant le balayage, comme par exemple une résine époxy qui réticule à température ambiante ou en étant chauffée.

Les gouttes de l'émulsion peuvent former un réseau bidimensionnel de gouttes. Dans cette variante, l'émulsion peut comprendre une grande densité ou fraction de gouttes de sorte que les gouttes se bloquent entre elles, et on peut ainsi figer les gouttes en formant un réseau compact ou semi compact de gouttes. La fraction volumique des gouttes dans l'émulsion peut être supérieure ou égale à 40%, de préférence supérieure ou égale à 60%. Les gouttes de l'émulsion peuvent former un solide colloïdal.

La phase continue comprend de préférence un surfactant.

Durant le balayage de l'émulsion, l'émulsion peut être stockée dans un logement, et :
- durant le balayage de l'émulsion, le logement peut être maintenu à une température sensiblement constante, de préférence avec une précision de plus ou moins 0,1°C, et/ou
- le logement peut comprendre une paroi plane qui durant le balayage de l'émulsion est en contact avec l'émulsion et est disposée horizontalement avec une dénivellation verticale inférieure à 5 micromètres sur une distance horizontale de 2 centimètres, et/ou
- le logement peut comprendre deux surfaces sensiblement parallèles qui durant le balayage de l'émulsion enserrent chacune des gouttes.

Le procédé selon l'invention peut comprendre en outre un suivi dans le temps d'une réaction chimique ou biologique se déroulant dans au moins une des gouttes, ledit suivi comprenant une réitération des étapes de balayage et de construction.

De même, le procédé selon l'invention peut comprendre en outre une localisation de gouttes comprenant un type donné de molécule ou de cellule par analyse de l'image bidimensionnelle de l'émulsion. La localisation peut comprendre une utilisation d'un algorithme de seuillage et segmentation sur l'image bidimensionnelle.

Le procédé selon l'invention peut comprendre en outre un prélèvement des gouttes comprenant le type donné de molécule ou de cellule. Le prélèvement peut comprendre par exemple :
- un déplacement d'une extrémité d'une micropipette à des coordonnées où a été localisée une goutte comprenant le type donné de molécule ou de cellule, et
- une aspiration de cette goutte par la micropipette.

Le procédé selon l'invention peut comprendre en outre un dénombrement de gouttes comprenant un type donné de molécule ou de cellule par analyse de l'image bidimensionnelle de l'émulsion. Le dénombrement peut comprendre une utilisation d'un algorithme de seuillage et segmentation sur l'image bidimensionnelle.

La construction de l'image bidimensionnelle comprend de préférence au cours du balayage :
- une projection de différentes images partielles de l'émulsion via le système optique sur un détecteur,
- une combinaison des différentes images partielles de l'émulsion acquises par le détecteur.

Les images partielles sont de préférence des images de signaux de fluorescence émis par l'émulsion.

L'émulsion est de préférence une émulsion inverse de gouttes d'eau dans de l'huile.

L'émulsion est de préférence étalée de manière à avoir une épaisseur comprise entre 1 et 100 couches de gouttes.

Le système optique peut avoir une profondeur de champ sensiblement égale ou supérieure à l'épaisseur de l'émulsion étalée.

Le procédé selon l'invention peut comprendre en outre :
- un placement de l'émulsion entre deux lames parallèles dont une au moins est transparente pour permettre la construction de l'image bidimensionnelle,
- un mouvement de cisaillement entre les deux lames jusqu'à ce que de l'émulsion soit monodisperse.

Dans ce document, on dit qu'une émulsion est monodisperse quand l'écart-type de la distribution des diamètres des gouttes à l'intérieur de cette émulsion est inférieur à 30% de la moyenne des diamètres de ces gouttes.

Suivant encore un autre aspect de l'invention, il est proposé un dispositif de lecture d'une émulsion comprenant des gouttes, ledit dispositif mettant en œuvre le procédé selon l'invention et comprenant :
- un logement pour recevoir l'émulsion,
- un système optique,
- des moyens pour effectuer un balayage bidimensionnel de l'émulsion par le système optique,
- des moyens pour construire une image bidimensionnelle de l'émulsion à partir d'un balayage bidimensionnel de l'émulsion.

L'émulsion comprend une phase continue entourant les gouttes.

Le dispositif selon l'invention peut comprendre des moyens pour figer les gouttes lors du balayage, c'est-à-dire des moyens pour que les gouttes ne bougent pas pendant le balayage.

Le dispositif selon l'invention peut comprendre des moyens pour solidifier la phase continue pendant le balayage.

La phase continue peut avoir une température de liquéfaction donnée, et le dispositif selon l'invention peut comprendre des moyens pour maintenir l'émulsion à une température inférieure à la température de liquéfaction de la phase continue durant le balayage de l'émulsion. Ainsi, dans cette variante, les moyens de solidification peuvent comprendre les moyens de maintient de température.

Dans d'autres variantes, les moyens de solidification peuvent comprendre des moyens pour solidifier la phase continue par réticulation, par exemple, si la phase continue est agencée pour réticuler lorsqu'elle est soumise à un rayonnement par exemple un rayonnement ultra violet, des moyens pour soumettre cette phase continue à tel rayonnement de réticulation de la phase continue ou plus généralement des moyens pour soumettre l'émulsion à tel rayonnement de réticulation, ou si la phase continue est agencée pour réticuler en étant chauffée, des moyens pour chauffer cette phase continue ou plus généralement des moyens pour chauffer l'émulsion.

Le dispositif selon l'invention peut comprendre des moyens pour fabriquer l'émulsion agencés pour que les gouttes de l'émulsion forment un réseau bidimensionnel de gouttes, ayant de préférence une fraction volumique de gouttes dans l'émulsion supérieure ou égale à 40%, plus précisément de préférence supérieure ou égale à 60%, et formant de préférence un solide colloïdal. Les moyens de fabrication comprennent de préférence une chambre de crémage ou de sédimentation des gouttes et des moyens pour prélever dans ladite chambre des gouttes diluées dans la phase continue selon une fraction volumique de gouttes donnée.

En outre, dispositif selon l'invention peut comprendre des moyens pour maintenir le logement à une température sensiblement constante durant le balayage de l'émulsion, de préférence avec une précision de plus ou moins 0,1°C.

Le logement peut comprendre une paroi plane agencée pour être en contact avec l'émulsion durant le balayage de l'émulsion et disposée horizontalement avec une dénivellation verticale inférieure à 5 micromètres sur une distance horizontale de 2 centimètres.

Le logement peut comprendre deux surfaces sensiblement parallèles agencées pour enserrer chacune des gouttes durant le balayage de l'émulsion.

Le dispositif selon l'invention peut comprendre en outre des moyens pour suivre dans le temps une réaction chimique ou biologique se déroulant dans au moins une des gouttes.

De plus, le dispositif selon l'invention peut comprendre en outre des moyens pour localiser des gouttes comprenant un type donné de molécule ou de cellule, les moyens de localisation comprenant des moyens d'analyse de l'image bidimensionnelle de l'émulsion.

Le dispositif selon l'invention peut comprendre en outre des moyens pour prélever des gouttes comprenant le type donné de molécule ou de cellule. Les moyens de prélèvement peuvent par exemple comprendre :
- une micropipette,
- des moyens pour déplacer une extrémité de la micropipette à des coordonnées d'une goutte comprenant le type donné de molécule ou de cellule et localisée par les moyens de localisation, et
- des moyens pour aspirer cette goutte par la micropipette.

De plus, le dispositif selon l'invention peut comprendre en outre des moyens pour dénombrer des gouttes comprenant un type donné de molécule ou de cellule, les moyens de dénombrement comprenant des moyens d'analyse de l'image bidimensionnelle de l'émulsion.

Les moyens de construction de l'image bidimensionnelle comprennent de préférence :
- un détecteur sur laquelle le système optique est agencé pour projeter différentes images partielles de l'émulsion au cours d'un balayage,
- des moyens pour combiner les différentes images partielles de l'émulsion acquises par le détecteur au cours du balayage.

Les images partielles sont de préférence des images de signaux de fluorescence émis par l'émulsion.

Le logement peut être agencé pour que l'émulsion soit étalée à l'intérieur du logement, de préférence de manière à avoir une épaisseur comprise entre 1 et 100 couches de gouttes.

Le système optique peut avoir une profondeur de champ sensiblement égale ou supérieure à l'épaisseur de l'émulsion étalée.

De plus, le logement comprend de préférence deux lames parallèles dont une au moins est transparente, et des moyens pour appliquer un mouvement de cisaillement entre les deux lames jusqu'à ce que de l'émulsion soit monodisperse.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
- les figures 1 et 2 illustrent un mode de réalisation préférentiel de dispositif selon l'invention mettant en œuvre un procédé selon l'invention;
- la figure 3 illustre une image bidimensionnelle d'émulsion, obtenue à partir du dispositif des figures 1 et 2 mettant en œuvre un premier mode de réalisation de procédé selon l'invention ;
- la figure 4 illustre un réseau de gouttes d'une émulsion;
- les figures 5 et 6 illustrent différentes variantes de réseaux de gouttes d'une émulsion placée dans le dispositif des figures 1 et 2 pour mettre en œuvre un deuxième mode de réalisation de procédé selon l'invention;
- la figure 7 illustre une chambre de crémage ou une chambre de sédimentation pour la mise en œuvre du deuxième mode de réalisation de procédé selon l'invention ;
- la figure 8 illustre un réseau de gouttes placé dans le dispositif des figures 1 et 2 ;
- la figure 9 illustre un agrandissement d'une goutte comprenant de la levure fluorescente ;
- la figure 10 est une image de fluorescence émise par la goutte de la figure 9 ; et
- la figure 11 illustre une intensité lumineuse de fluorescence issue de la goutte de la figure 9 en fonction du temps.

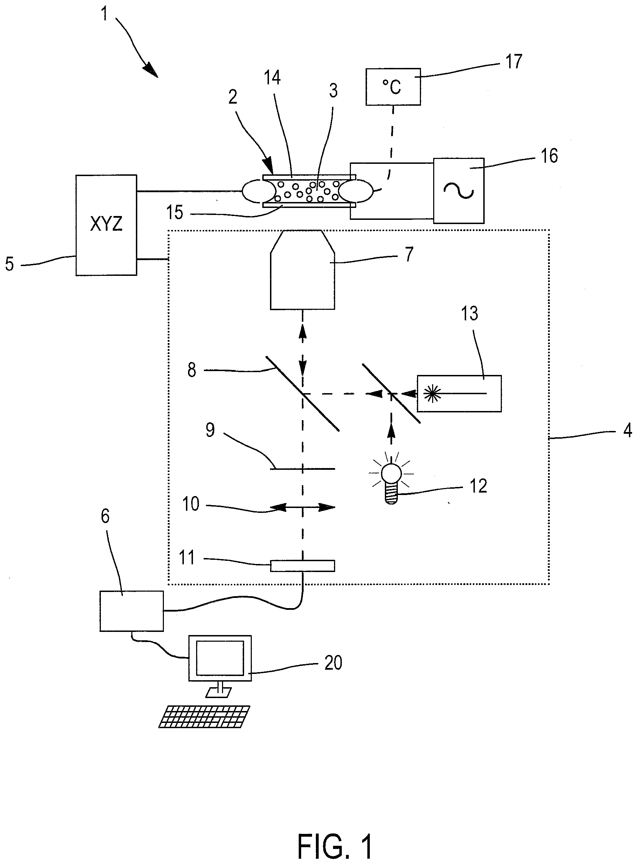

On va décrire, en référence aux figures 1 à 3, un mode de réalisation préférentiel de dispositif 1 selon l'invention mettant en œuvre un procédé selon l'invention.

Le dispositif 1 comprend :
- un logement 2 pour recevoir une émulsion 3 qui comprend des gouttes 21 et une phase continue 23,
- un système optique 4, plus particulièrement un système de microscopie optique,
- une platine 5 motorisée selon trois directions orthogonales X, Y, Z, agencée pour déplacer le logement 2 et donc l'émulsion 3 par rapport au système optique selon les trois directions X, Y et Z ; on parlera indifféremment de position du logement 2 ou de position de l'émulsion 3. La platine 5 est en particulier agencée pour effectuer un balayage bidimensionnel de l'émulsion 3 par le système optique 4,
- une unité d'analyse 6, comprenant typiquement une unité centrale d'un ordinateur, un circuit électronique numérique, un circuit électronique analogique, un microprocesseur et/ou des moyens logiciels,
- un écran 20 relié à l'unité 6.

Le logement 2 est constitué d'un matériau comprenant par exemple un polymère tel que du PolyDimethylSiloxane (PDMS) ou bien du verre.

Chaque goutte de l'émulsion est sensiblement sphérique et constitue un réservoir isolé des autres gouttes et dans lequel peut se dérouler une réaction ou un évènement chimique ou biologique.

La phase 23 entoure les gouttes 21, c'est-à-dire qu'elle englobe les gouttes, est distincte des gouttes 21, et est en contact avec le pourtour de chacune de ces gouttes 21.

En outre, la phase 23 est dite « continue » car pour n'importe quelle paire de points situés dans cette phase 23, il est toujours possible de tracer une ligne reliant ces deux points, ladite ligne ne faisant d'intersection avec aucune des gouttes 21 mais passant exclusivement soit par la phase continue 23 soit éventuellement par au moins un point ou ligne de jonction au niveau duquel ou de laquelle les pourtours extérieurs de deux gouttes 21 sont tangents ou en contact.

Par balayage bidimensionnel de l'émulsion 3 par le système optique 4, on entend un déplacement relatif du système optique 4 par rapport à l'émulsion selon au moins deux directions spatiales orthogonales X et Y, les directions X, Y étant typiquement contenues dans un plan parallèle à l'émulsion 3, aux lames 14, 15 et à un plan focal du système optique 4 correspondant au plan focal objet de l'objectif 7).

Le système optique 4 comprend :
- un objectif de microscope 7,
- un miroir dichroïque 8,
- un filtre dichroïque 9,
- un jeu de lentilles 10,
- un détecteur 11 qui consiste typiquement en une caméra CCD,
- une source de lumière blanche 12 agencée pour éclairer le logement 2 et l'émulsion 3, et
- un laser d'excitation 13, agencé pour émettre un rayonnement sur le logement 2 et l'émulsion 3.

Dans une variante, on peut utiliser à la place du laser 13 une lampe à arc au mercure munie d'un filtre d'excitation.

Lors du balayage de l'émulsion 3 par le système optique, la position relative de l'émulsion 3 par rapport au système optique 4 change. L'émulsion émet de la lumière qui est captée par l'objectif. Cette lumière est par exemple émise par diffusion de lumière blanche provenant de la source 12, et/ou par émission de fluorescence suite à une excitation de l'émulsion par le laser 13. La lumière captée par l'objectif 7 et provenant de l'émulsion correspond à une portion de l'émulsion, et passe à travers le miroir 8 et le filtre 9, puis est focalisée sur la caméra CCD 11 par le jeu de lentilles 10. Pour chaque position relative de l'émulsion 3 par rapport au système optique 4, la caméra 11 acquiert ainsi une image partielle donnée de l'émulsion 3, cette image partielle correspondant à la portion de l'émulsion imagée par le système optique 4 pour cette position relative. Ainsi, le système optique est agencé pour projeter sur la caméra 11 différentes images partielles de l'émulsion au cours d'un balayage de l'émulsion par le système optique 4. Les images partielles peuvent comprendre des images partielles de l'émulsion par fluorescence, par luminescence et/ou en lumière blanche, selon la nature de la lumière éclairant l'émulsion et selon la nature du filtre 9. Dans une réalisation préférée, les images partielles sont des images de signaux de fluorescence émis par l'émulsion.

Comme il sera expliqué par la suite en détaillant le procédé selon l'invention, l'unité d'analyse 6 est agencée pour :
- construire une image bidimensionnelle de l'émulsion à partir d'un balayage bidimensionnel de l'émulsion par le système optique 4 au moyen de la platine 5, cette construction s'effectuant par une combinaison des différentes images partielles de l'émulsion acquises par la caméra 11 au cours du balayage ;
- analyser une image bidimensionnelle de l'émulsion construite par cette unité 6, de manière à :
   o localiser dans cette image bidimensionnelle des gouttes spécifiques 22 comprenant un type donné de molécule ou de cellule et déterminer les coordonnées de chacune des gouttes 21, 22 dans cette image bidimensionnelle, et/ou
   o dénombrer dans cette image bidimensionnelle des gouttes spécifiques 22 comprenant un type donné de molécule ou de cellule ;
- suivre dans le temps une réaction chimique ou biologique se déroulant dans au moins une des gouttes, en stockant et en comparant des images bidimensionnelles successives construites par cette unité 6.

Par image bidimensionnelle de l'émulsion, on entend un ensemble de données représentatives de l'émulsion (comme par exemple une intensité, une ou plusieurs couleurs, des signaux de fluorescence, etc...) en fonction de deux coordonnées spatiales orthogonales X et Y. Typiquement, ces données peuvent être stockées :
- sous forme graphique dans un fichier image type JPEG, BITMAP, ou autre pouvant être directement affiché sur l'écran 20, ou
- sous forme brute dans un fichier de données comme un fichier texte, un fichier d'un tableur ou autre.

Le filtre 9 est agencé pour laisser passer un signal de fluorescence spécifique émis par les gouttes spécifiques 22 mais pour bloquer les longueurs d'onde émises par le laser 13, de sorte que la caméra soit agencée pour détecter ce signal de fluorescence spécifique. L'unité 6 est agencée pour enregistrer ce signal de fluorescence spécifique comme faisant partie des données de l'image bidimensionnelle.

Le logement comprend deux lames parallèles 14, 15 entre lesquelles est placée l'émulsion 3. Ces deux lames 14, 15 sont sensiblement parallèles à un plan focal du système optique 4, plus particulièrement ces deux lames 14, 15 sont sensiblement parallèles au plan focal objet de l'objectif 7. Une de ces lames 15 est agencée pour être située entre l'émulsion 3 et le système optique 4 (ou l'objectif 7), et est transparente. Le système optique 4 est agencé pour imager l'émulsion 3 à travers cette lame transparente 15 pour permettre la construction de l'image bidimensionnelle. L'autre lame 14 est située du côté opposé au système optique 4 par rapport à l'émulsion 3.

En outre, le logement 2 est agencé pour que l'émulsion soit étalée entre les deux lames 14, 15 de manière à avoir une épaisseur comprise entre 1 et 100 couches de gouttes. Dans un mode de réalisation préféré, le système optique 4 a une profondeur de champ égale à l'épaisseur de plusieurs couches de gouttes 21, voire même sensiblement égale ou supérieure à l'épaisseur totale de l'émulsion étalée, de sorte qu'en balayant une unique fois l'émulsion, on crée une image bidimensionnelle de l'ensemble de l'épaisseur de l'émulsion.

Le dispositif 1 comprend en outre des moyens motorisés 16 agencés pour appliquer un mouvement de cisaillement entre les deux lames 14, 15 jusqu'à ce que de l'émulsion 3 soit monodisperse.

Le dispositif 1 comprend en outre des moyens 17 pour maintenir l'émulsion 3 à une température constante inférieure à la température de liquéfaction de la phase continue 23 durant le balayage de l'émulsion. Ces moyens de maintient comprennent typiquement :
- une sonde agencée pour mesurer la température de la lame 14 et/ou 15 et/ou directement la température de l'émulsion 3,
- des moyens pour chauffer et/ou réfrigérer la lame 14 et/ou 15 et/ou directement l'émulsion 3, de manière à réguler la température de l'émulsion à la température constante.

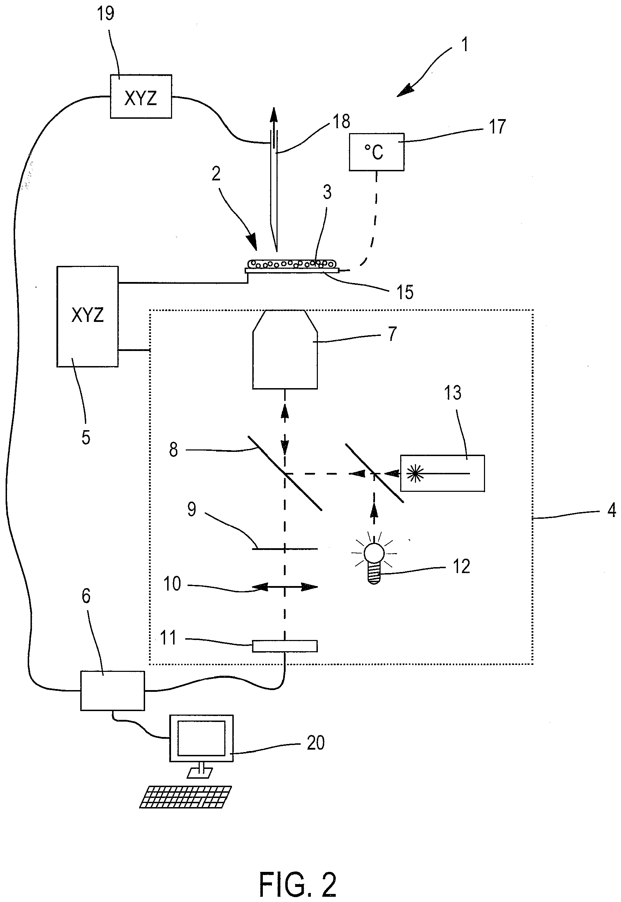

Enfin, le dispositif 1 comprend en outre des moyens pour prélever des gouttes spécifiques 22. Les moyens de prélèvement (représentés uniquement sur la figure 2) comprennent :
- une micropipette 18,
- une platine 19 motorisée selon les trois directions orthogonales X,Y,Z, agencée pour déplacer la micropipette par rapport au logement 2 et à l'émulsion 3 selon les trois directions X, Y et Z, et pour déplacer une extrémité de la micropipette à des coordonnées d'une goutte spécifique 22 localisée l'unité 6, et
- des moyens de succion (non représentés) agencés pour aspirer cette goutte le long de la micropipette.

Pour permettre un accès de la micropipette 18 à l'émulsion 3, la lame 14 est amovible et peut donc être retirée comme représenté sur la figure 2.

On va maintenant décrire un premier mode de réalisation de procédé de lecture selon l'invention mis en œuvre par le dispositif 1.

Ce premier mode de réalisation de procédé de lecture de l'émulsion 3 selon l'invention comprend :
- une fabrication de l'émulsion 3 sous une forme grossière polydisperse, en utilisant une des techniques suivante pour obtenir un cisaillement limité : champ électrique, ultrasons, agitateur magnétique, ou cisaillement manuel ; puis
- un placement de l'émulsion 3 dans le logement 2 et entre les deux lames parallèles 14, 15 ; puis
- un chauffage de l'émulsion par les moyens 17 à une température supérieure à sa température de liquéfaction ; puis
- un mouvement de cisaillement entre les deux lames 14, 15 jusqu'à ce que de l'émulsion sous forme liquide soit monodisperse, c'est-à-dire jusqu'à ce que l'écart-type de la distribution des diamètres des gouttes 21 soit inférieur à 30% de la moyenne des diamètres des gouttes 21 ; ce mouvement de cisaillement est crée par les moyens motorisés 16 ; puis
- un retrait de la lame 14 et un refroidissement de l'émulsion par les moyens 17 à une température inférieure à sa température de liquéfaction, puis
- au moins un balayage bidimensionnel de l'émulsion par le système optique 4 au moyen de la platine 5 ; au cours de chaque balayage, la position relative de l'émulsion 3 par rapport au système optique 4 change, et pour différentes positions relatives de l'émulsion 3 par rapport au système optique 4, la caméra 11 acquiert ainsi différentes images partielles données de l'émulsion 3, chaque image partielle correspondant à une portion donnée de l'émulsion imagée par le système optique pour une position relative donnée; pour chaque balayage, les images partielles acquises au cours de ce balayage sont adjacentes entre elles et sont réparties le long des deux directions orthogonales de balayage X, Y ; et
- pour chaque balayage, une construction d'une image bidimensionnelle 24 de l'émulsion à partir dudit balayage, cette construction comprenant :
   o une projection des différentes images partielles de l'émulsion via le système optique 4 sur la caméra 11, et une acquisition de ces images partielles par la caméra 11 ; et
   o une combinaison, par l'unité 6, des différentes images partielles de l'émulsion acquises par la caméra au cours dudit balayage.

Chaque image partielle peut par exemple correspondre à une portion de l'émulsion ayant une largeur typique de 100 micromètres, alors que l'image bidimensionnelle 24 peut correspondre à une vue de l'émulsion de plusieurs centimètres carré de surface. Même en utilisant un objectif 7 avec un grossissement X10, on observe une surface de 3.3 mm X 3.3 mm par image partielle, soit environ 100 000 gouttes ayant un diamètre de 1 micromètre. On peut ainsi détecter une fluorescence équivalente à celle de 500 molécules de fluorescéine. On enregistre l'image partielle correspondante et on se déplace sur une zone immédiatement adjacente avant d'enregistrer une nouvelle image partielle. On peut ainsi lire 10 images partielles par seconde ou plus pour construire une image bidimensionnelle, soit 1 million de gouttes 21 par seconde et 1 milliard de gouttes 21 en 15 minutes.

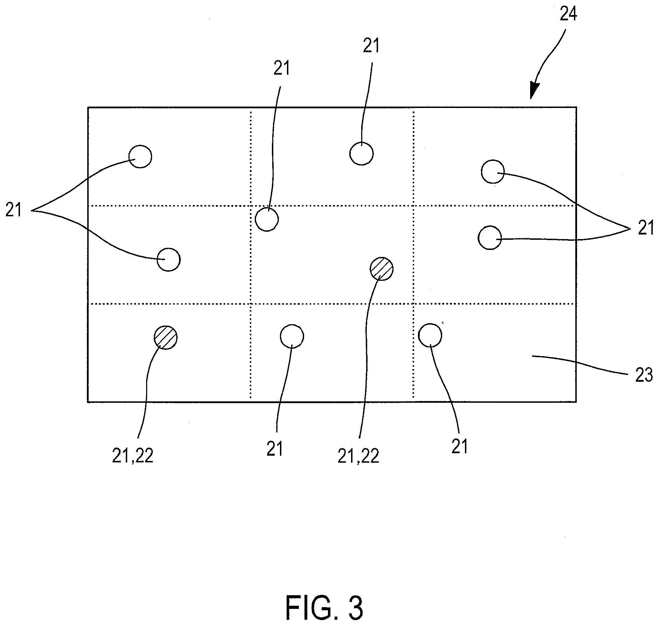

L'image bidimensionnelle 24 de la figure 3 se décompose en neuf images partielles adjacentes délimitées par des pointillés. On remarque que l'image bidimensionnelle 24 de la figure 3 n'est que schématique, et que la taille des gouttes 21a été considérablement augmentée et que le nombre de gouttes 21 a été considérablement diminué pour une meilleur visibilité. En effet, l'image bidimensionnelle 24 correspond en réalité à une vue de l'émulsion de plusieurs centimètres carré de surface, et comprend donc typiquement des centaines de milliers de gouttes 21 de 1 micromètres de diamètre.

Dans une variante, on peut se contenter de lire les images partielles et les traiter en temps réel, sans reconstruire de grande image sous la forme d'un fichier image, mais juste de manière à construire un fichier regroupant diverses données représentatives de l'émulsion (telles les coordonnées de gouttes spécifiques 22, les signaux de fluorescence, etc...).

L'émulsion 3 est une émulsion inverse de gouttes d'eau 21 dans une phase huileuse 23 appelée par la suite huile 23. Ces gouttes consistent plus précisément en des microgouttes ou microcapsules 21 ayant un diamètre typique compris entre 100 nanomètres et 100 micromètres, de préférence de 0,5 micromètre à 5 micromètres, plus préférentiellement d'environ 1 micromètre. Pour des raisons optiques, les indices optiques de l'huile 23 et des compartiments aqueux 21 sont sensiblement égaux.

Parmi ces gouttes d'eau 21, certaines gouttes spécifiques 22 contiennent un ou plusieurs type(s) donné(s) de molécule chimique et/ou biologique à localiser. Ces molécules ou cellules sont de préférence fluorescentes, ou sont accompagnées d'un ou plusieurs marqueur(s) fluorescent(s), de manière à émettre un signal de fluorescence spécifique suite à une excitation par le laser 13. Ces molécules ou cellules sont de préférence contenues dans chaque goutte dans une quantité supérieure à un certain seuil de détection. Du fait de ces molécules et/ou cellules, au moins une réaction chimique ou biologique peut se produire dans chacune des microcapsules spécifiques 22. Par réaction biologique, on entend de manière générale toute réaction de biologie moléculaire ou de biologie cellulaire. Ainsi, chaque microcapsule spécifique 22 joue le rôle d'un microréacteur chimique ou biochimique indépendant et permet de réaliser de très nombreuses réactions en parallèle (jusqu'à dix milliards de réaction par millilitre).

Un premier exemple de réaction concerne l'expression d'un gène unique par goutte et le domaine de l'évolution dirigée. On part d'une banque de gènes codants par exemple des variantes d'une enzyme, puis on exprime (par transcription/traduction in vitro) ces gènes. Le dispositif selon l'invention permet de localiser et prélever les gouttes spécifiques 22 comprenant ce gène unique sur la base de l'activité de ces variantes d'enzyme, par exemple grâce à un signal fluorescence émit uniquement par les gouttes spécifiques 22 comprenant ce gène unique, ce signal étant détecté par la caméra 11 et compris dans les données de l'image bidimensionnelle 24.

Un deuxième domaine d'application des émulsions considérées comme des microréacteurs est le diagnostic et plus généralement la détection de molécules tels des polluants ou des agents bioterroristes. Les gouttes 21 servent alors à augmenter la concentration locale d'un produit à détecter, ce qui permet d'abaisser le seuil de détection par rapport à une détection en volume. Dans ce cas, les gouttes spécifiques 22 sont des gouttes qui contiennent une certaine concentration de molécule ou cellule supérieure à leur seuil de détection par fluorescence. Les gouttes peuvent servir à compartimenter l'expression in vitro d'une ou plusieurs protéines rapporteuses, l'expression de ces protéines étant à la base du test de diagnostic.

Comparativement à des procédés de lecture linéaire selon l'art antérieur mis en œuvre dans un micro-canal ou dans un « FACS », le procédé selon l'invention a donc pour avantage d'être plus rapide, ce qui est particulièrement pratique pour la recherche de gouttes spécifiques 22 rares parmi l'ensemble des gouttes 21.

Après le retrait de la lame 14, l'émulsion 3 est étalée sur la lame 15 de manière à avoir une épaisseur inférieure à celle de 10 couches de gouttes 21. Une couche de gouttes est une couche ayant comme épaisseur le diamètre moyen des gouttes 21. Dans une variante, l'émulsion 3 est étalée sur la lame 15 sous la forme d'une monochouche de gouttes 21, c'est à dire que l'émulsion a une épaisseur égale à celle d'une unique couche de gouttes, car cela facilite un prélèvement de goutte par la micropipette 18. Dans une autre variante, l'émulsion 3 est étalée sur la lame 15 de manière à avoir une épaisseur de plusieurs couches de gouttes 21 (typiquement 10 couches), car cela est particulièrement avantageux avec un système optique 4 qui a une profondeur de champ sensiblement égale ou supérieure à l'épaisseur de l'émulsion étalée : cela permet en effet de faire une recherche des gouttes spécifiques 22 dans l'ensemble des couches de l'émulsion 3 avec un unique balayage, ce qui est avantageux lorsque les gouttes spécifiques 22 sont rares.

En outre, l'émulsion comprend la phase continue d'huile 23, entourant les gouttes 21, et ayant une température de liquéfaction (c'est-à-dire une température au-delà de laquelle cette huile passe de l'état solide à l'état liquide) supérieure à 0°C, de sorte que de manière générale cette huile est solide à température ambiante lors du balayage. Plus précisément, la température de liquéfaction de l'huile 23 est supérieure à 37°C, et même supérieure à 40°C, voir même de préférence supérieure à 50°C.

Ainsi, l'émulsion a une température de liquéfaction (c'est-à-dire une température au-delà de laquelle cette émulsion passe de l'état solide à l'état liquide) supérieure à 0°C, de sorte que de manière générale l'émulsion est solide à température ambiante lors du balayage. Par solide, on entend un état non liquide et non gazeux. Dans certains cas particuliers, cet état solide peut être un gel, un verre ou un état cristallisé. Plus précisément, la température de liquéfaction de l'émulsion est supérieure à 37°C, et même supérieure à 40°C, voire même de préférence supérieure à 50°C. De cette manière, l'émulsion peut ainsi être chauffée à une température (typiquement 25°C ou 37°C) idéale pour une réaction biologique ou chimique tout en restant solide lors de son balayage. Ainsi, le procédé selon l'invention comprend en outre, durant chaque balayage de l'émulsion, un maintient de l'émulsion à une température (typiquement 25°C ou 37°C) inférieure à la température de liquéfaction de la phase continue 23. Ce maintient est mis en œuvre par les moyens de maintient 17.

Une formule d'émulsion 3 utilisable est la suivante :
- la phase continue huileuse 23 comprend:
   o une fraction volumique dans l'huile en Span60 de x%, avec x compris entre 0,5% et 5%, de préférence sensiblement égal à 2,5%,
   o une fraction volumique dans l'huile en cholestérol de y%, avec y compris entre 0,5% et 5%, de préférence sensiblement égal à 2,5%,
   o une fraction volumique dans l'huile en Dodecane de (100-x-y) %,
- les gouttes 21 comprennent une solution aqueuse comprenant des molécules et/ou de cellules à isoler dans les gouttes, et de l'eau.

L'émulsion comprend :
- une fraction volumique en eau de 40% à 90 %, de préférence sensiblement 70%, qui permet de former les gouttes, et
- et une fraction volumique en phase huileuse de 10 % à 60 %, de préférence de sensiblement 30%.

Le procédé selon l'invention comprend en outre les étapes suivantes mis en œuvre par l'unité d'analyse 6 pour chaque image bidimensionnelle construite:
- une localisation dans l'image bidimensionnelle 24 des gouttes spécifiques 22 (c'est-à-dire une détermination des coordonnées de chaque goutte spécifique 22 dans l'image bidimensionnelle 24) par analyse de l'image bidimensionnelle 24 ; la localisation et l'analyse comprennent typiquement une utilisation d'un algorithme de seuillage et segmentation (logiciel NIS, de chez Nikon) sur l'image bidimensionnelle ; typiquement, les gouttes spécifiques sont localisées car elles émettent un signal de fluorescence spécifique qui est détecté par la caméra 11 et qui fait partie des données de l'image bidimensionnelle : le laser 13 émet un rayonnement qui excite des molécules, cellules et/ou marqueurs fluorescents contenus dans les gouttes spécifiques 22, le filtre 9 laisse passer le signal de fluorescence émis par chaque goutte spécifique 22 mais bloque les longueurs d'onde émise par le laser 13, de sorte que la caméra détecte chaque signal de fluorescence spécifique, puis l'unité 6 enregistre les coordonnées spatiales et les valeurs de chaque signal de fluorescence spécifique comme faisant partie des données de l'image bidimensionnelle ;
- un dénombrement dans l'image bidimensionnelle 24 des gouttes spécifiques 22 (c'est-à-dire un calcul du nombre de gouttes spécifiques 22 dans l'image bidimensionnelle 24) par analyse de l'image bidimensionnelle de l'émulsion ; le dénombrement et l'analyse comprennent typiquement une utilisation d'un algorithme de seuillage et segmentation (logiciel NIS, de chez Nikon) sur l'image bidimensionnelle.

Dans une première variante, le procédé selon l'invention comprend ensuite un prélèvement d'une ou plusieurs des gouttes spécifiques 22, le prélèvement de chaque goutte 22 comprenant :
- un déplacement de l'extrémité de la micropipette 18 à des coordonnées où a été localisée une goutte spécifique 22 ; la micropipette est déplacée par la platine 19, et ce déplacement est automatisé car après avoir localisé une goutte spécifique 22, l'unité d'analyse 6 communique directement les coordonnées de cette goutte 22 à la platine 19 ; et
- une aspiration de cette goutte spécifique 22 le long de la micropipette 18.

On prélève ainsi une à une un petit nombre de gouttes 22 par rapport au nombre total de gouttes 21 lues, grâce aux moyens de succion. Typiquement, moins de 10 000, de préférence moins de 1000 ou moins de 100 gouttes 22 sont prélevées. Lorsque ces gouttes prélevées 22 contiennent chacune un gène, on peut ensuite amplifier ces gènes (après avoir éliminé la phase huile) par une des techniques d'amplification de gènes de type molécule unique (par exemple : « single molecule PCR », « single molecule PCR » en émulsion)

Dans une deuxième variante, combinable avec la première variante, le procédé selon l'invention comprend en outre un suivi dans le temps d'une réaction chimique ou biologique se déroulant dans au moins une des gouttes spécifiques 22, ledit suivi comprenant une réitération des étapes de balayage et de construction, et éventuellement de localisation et/ou de dénombrement. Pour réaliser ce suivi, l'unité 7 stocke et compare différentes images bidimensionnelles successives construites par cette unité 6.

L'émulsion 3 étant solide pendant et entre tous les balayages réalisés pour le suivi de la réaction, les gouttes 21 ne bougent pas et on peut donc identifier chaque goutte 21 de manière non équivoque, ce qui permet des suivis cinétique (impossibles par FACS). L'utilisation d'une émulsion solide permet également de supprimer tout échange de solutés entre les gouttes. Les gouttes 21 ne bougeant pas, on peut immédiatement repérer l'évolution de la fluorescence de chacune de ces milliers de gouttes 21 au cours du temps.

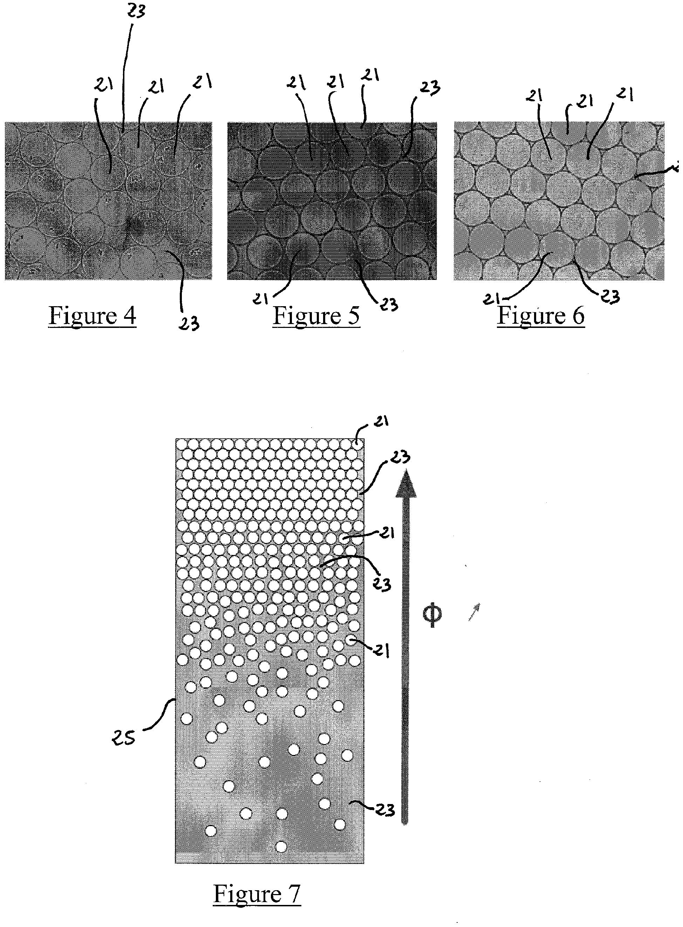

On va maintenant décrire, en référence aux figures 4 à 8, un deuxième mode de réalisation de procédé de lecture selon l'invention mis en œuvre par le dispositif 1. Ce deuxième mode de réalisation ne sera décrit que pour ses différences par rapport au premier mode de réalisation précédemment décrit.

Dans le premier mode de réalisation de procédé selon l'invention, on a solidifié la phase continue 23, afin de figer les gouttes 21. Les gouttes sont figées par les moyens 17.

Dans le deuxième mode de réalisation de procédé selon l'invention, on fige les gouttes en utilisant un réseau semi-compact ou compact de gouttes, de sorte que les gouttes se bloquent entre elles. Les gouttes sont figées par le réseau compact ou semi compact de gouttes, et par les moyens 17, 14, et 15 tel que décrit par la suite.

Les figures 4 à 6 illustrent différentes variantes d'émulsion 3 pouvant être placée dans le logement 2 du dispositif 1 et dont les gouttes forment un réseau bidimensionnel de gouttes. On dit que des gouttes forment un réseau bidimensionnel si pour n'importe quelle de ces gouttes, cette goutte est tangente à au moins deux autres gouttes, ces trois gouttes tangentes n'étant pas alignées. Sur ces figures, le diamètre moyen des gouttes 21 dans la phase continue 23 est d'environ 60 micromètres.

La fraction volumique Φ des gouttes dans l'émulsion est, pour un volume d'émulsion donné, le rapport entre :
- d'une part la somme du volume des gouttes contenu dans ce volume d'émulsion, et
- d'autre part ce volume d'émulsion.

La figure 4 illustre le cas où la fraction volumique des gouttes 21 est inférieure à 40%.

Dans la mise en œuvre du deuxième mode de réalisation de procédé selon l'invention, la fraction volumique des gouttes 21 est supérieure ou égale à 40 %, et est de préférence supérieure ou égale à 60%.

Pour une fraction volumique de gouttes comprise entre 40% et 60% telle qu'illustrée sur la figure 5, on dit que les gouttes forment un réseau bidimensionnel semi-compact de gouttes.

Pour une fraction volumique de gouttes supérieure ou égale à 60% telle qu'illustrée sur la figure 6, on dit que les gouttes forment un réseau bidimensionnel compact de gouttes.

Pour une fraction volumique de gouttes supérieure ou égale à 60% telle qu'illustrée sur la figure 6, les gouttes 21 de l'émulsion forment un solide colloïdal, c'est-à-dire qu'elles sont suspendues dans la phase continue 23 mais avec une telle densité qu'elles ne peuvent plus se réarranger dans le réseau de gouttes, elles se bloquent entre elles et sont figées comme les molécules dans un solide.

Dans la mise en œuvre du deuxième mode de réalisation de procédé selon l'invention, la phase continue 23 comprend un surfactant afin de stabiliser les gouttes 21 et empêcher qu'elles ne coalescent ce qui entrainerait l'effondrement du réseau de gouttes par séparation de phase (c'est-à-dire la création d'une phase continue d'huile et d'une phase aqueuse distincte et continue). On entend par surfactant un composé tensioactif qui modifie la tension superficielle qui s'exerce entre chaque goutte et la phase continue 23, de manière à stabiliser l'émulsion et éviter la coalescence des gouttes, tel que par exemple un surfactant appartenant à la série des SPAN (par exemple SPAN 60, SPAN 80, etc...).

Une formule d'émulsion 3 utilisable pour le deuxième mode de réalisation de procédé selon l'invention est la suivante :
- la phase continue huileuse 23 fluorocarbonée comprend:
   o une huile fluorée (par exemple Fluoroinert FC-3283, de chez 3M)
   o un surfactant fluoré fait du sel d'ammonium d'un polyether perfluoré (par exemple Krytox FSL de chez Dupont), la fraction massique dans l'huile en surfactant étant de x%, avec x compris entre 0,5% et 5%, de préférence sensiblement égal à 2%,
- les gouttes 21 comprennent une solution aqueuse comprenant des molécules et/ou de cellules à isoler dans les gouttes, et de l'eau.

L'émulsion comprend :
- une fraction volumique en eau de 40% à 90 %, de préférence sensiblement 70%, qui permet de former les gouttes, et
- et une fraction volumique en phase huileuse de 10 % à 60 %, de préférence de sensiblement 30%.

Le deuxième mode de réalisation de procédé de lecture de l'émulsion 3 selon l'invention comprend :
- une fabrication de l'émulsion 3 sous une forme grossière polydisperse, en utilisant par exemple une des techniques suivante pour obtenir un cisaillement limité : champ électrique, ultrasons, agitateur magnétique, ou cisaillement manuel ; on utilise de préférence un cisaillement d'une phase aqueuse disperse dans une phase continue d'huile, et une technique « d'hydrodynamic focusing » par exemple telle que décrite dans l'article de Shelley L. Anna et al. intitulé « Formation of dispersions using flow focusing in microchannels » publié dans APPLIED PHYSICS LETTERS, 2003, 82, 364-366 ; puis
- on place l'émulsion fabriquée dans une chambre de crémage ou de sédimentation suivant la différence de densité entre la phase continue 23 et la phase disperse c'est-à-dire les gouttes 21. Les gouttes 21 sont soumises à la gravité et subissent la force d'Archimède. Le sens du mouvement des gouttes dépend simplement de la différence de densité entre les deux phases. Dans le cas où les gouttes 21 sont moins denses que la phase continue 23, les gouttes se déplacent à l'opposé de la gravité, elles crèment, et on utilise une chambre de crémage. Dans le cas inverse, où les gouttes 21 sont plus denses que la phase continue 23, les gouttes se déplacent dans le sens de la gravité, elles sédimentent, et on utilise une chambre de sédimentation. La compétition entre la force d'Archimède et les forces visqueuses dues au drainage du film d'huile et les interactions entre les gouttes 21 entraîne la création d'un gradient de concentration en gouttes et ainsi une stratification. La figure 7 illustre une chambre de crémage 25 dans laquelle la fraction volumique des gouttes Φ augmente dans une direction opposée à la gravitée. Pour obtenir un réseau de gouttes 21 avec le degré de compaction voulu on prélève, au moyen d'une pipette 18, des gouttes 21 dans la chambre 25 au niveau d'une strate qui a localement une fraction volumique des gouttes Φ (c'est-à-dire une concentration en gouttes) désirée supérieure ou égale à 40 %, de préférence supérieure ou égale à 60%, et on injecte les gouttes prélevées dans le logement 2.
- puis, alors que l'émulsion est stockée dans le logement, on réalise au moins un balayage bidimensionnel de l'émulsion et pour chaque balayage une construction d'une image bidimensionnelle 24 de l'émulsion à partir dudit balayage, tel que décrit pour le premier mode de réalisation de procédé selon l'invention.

Pendant chaque balayage, on réduit les forces qui peuvent déplacer les gouttes 21 dans l'émulsion. Ces forces sont notamment engendrées par la gravité et par la compression/dilatation du logement 2 à cause de fluctuations thermiques. Ainsi, pour réduire ces forces et pour figer les gouttes :
- durant le balayage de l'émulsion, le logement 2 est maintenu à une température sensiblement constante par les moyens 17, de préférence avec une précision de plus ou moins 0,1°C ;
- la lame 15 comprend une paroi plane qui durant le balayage de l'émulsion est en contact avec l'émulsion et est disposée horizontalement avec une dénivellation verticale inférieure à 5 micromètres sur une distance horizontale de 2 centimètres ; et
- les lames 14 et 15 sont parallèles et, durant le balayage de l'émulsion, enserrent chacune des gouttes 21; autrement dit, le logement 2 a une épaisseur verticale séparant les lames 14, 15 inférieure au diamètre moyen des gouttes 21 non contraintes, de sorte que l'émulsion 3 soit étalée sur la lame 15 sous la forme d'une monochouche de gouttes 21 et que les gouttes 21 subissent une contrainte verticale, si bien que les gouttes 21 sont confinées verticalement et ne sont plus sphériques mais en « galettes ».

En outre, le deuxième mode de réalisation peut comprendre d'autres étapes comme par exemple :
- une analyse d'image bidimensionnelle (localisation, dénombrement, etc...) telle que décrite précédemment pour le premier mode de réalisation de procédé selon l'invention; et/ou
- un suivi dans le temps d'une réaction chimique ou biologique tel que décrit précédemment pour le premier mode de réalisation de procédé selon l'invention: dans le deuxième mode de réalisation de procédé selon l'invention, les gouttes forment un réseau compact ou semi compact ; pendant et entre tous les balayages réalisés pour le suivi d'une réaction, les gouttes 21 ne bougent pas et on peut donc identifier chaque goutte 21 de manière non équivoque en associant à chaque goutte une position dans le réseau bidimensionnel de gouttes, ce qui permet un repérage spatial et temporel de chaque goutte, et ce qui permet donc des suivis cinétiques (impossibles par FACS) ; les gouttes 21 ne bougeant pas, on peut immédiatement repérer l'évolution de la fluorescence de chacune de ces milliers de gouttes 21 au cours du temps ; et/ou
- un prélèvement de gouttes tel que décrit précédemment pour le premier mode de réalisation de procédé selon l'invention.

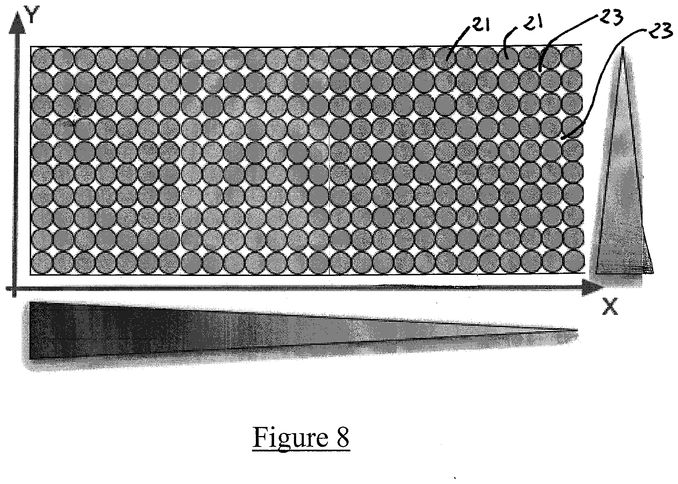

De manière avantageuse, en référence à la figure 8 :
- chacune des gouttes comprend une certaine quantité d'un premier composé A et une certaine quantité d'un second composé B, et
- le réseau bidimensionnel de gouttes 21 contenu dans un plan défini par les axes distincts X et Y est tel qu'il existe d'une goutte à une autre un gradient du composé A selon l'axe X et un gradient du composé B selon l'axe Y ;
ainsi, on obtient pour chaque position dans le réseau bidimensionnel de gouttes une composition différente en composés A et B, et on réalise un diagramme de phase des composés A et B par balayage du réseau de gouttes. Le contenu des gouttes est inhomogène d'une goutte à une autre. L'inhomogénéité du contenu des gouttes est une propriété qui est utilisée pour la réalisation de diagrammes de phase à deux dimensions. A une goutte, on associe une composition (chimique ou biologique par exemple) ce qui permet d'étudier et de cribler un grand nombre de combinaisons de composés.

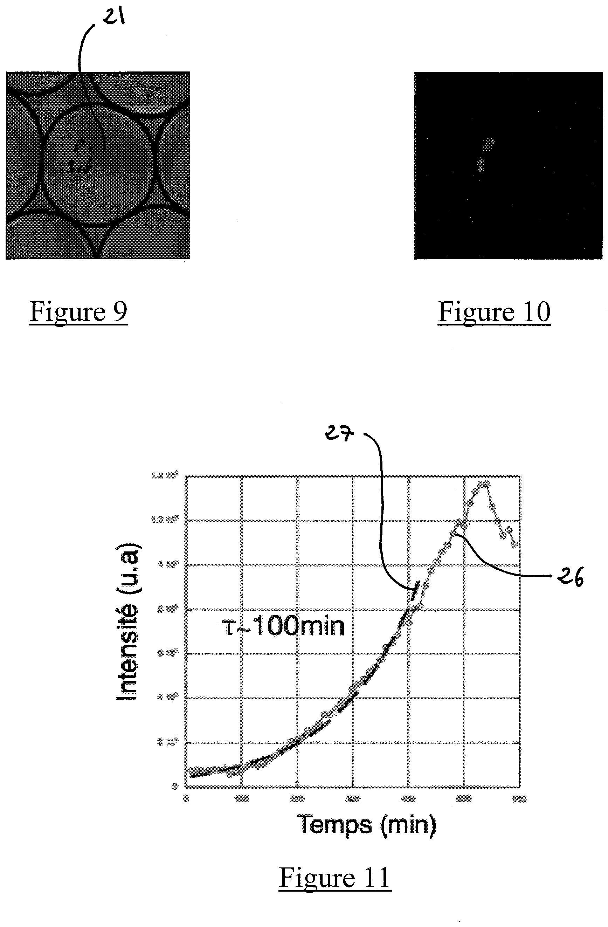

On va maintenant décrire, en référence aux figures 9 à 11, un exemple d'application du premier et/ou deuxième mode de réalisation de procédé selon l'invention :
- comprenant un suivi dans le temps d'une cinétique telle qu'une croissance cellulaire d'une levure, et
- dans lequel les gouttes ne bougent pas pendant un balayage et entre les balayages successifs du suivi temporel, et donc dans lequel une goutte correspond à une position donnée.

Dans cet exemple, chaque goutte contient initialement (à t=0) 0 ou 1 levure fluorescente.

La figure 9 est une vue en lumière blanche d'une goutte 21 contenant 4 levures à un instant donné t>0, cette goutte contenant initialement à t=0 une seule levure fluorescente.

La figure 9 est une image de la fluorescence émise par cette goutte 21.

La figure 11 illustre une courbe 26 d'intensité de fluorescence cumulée sur toutes les levures de cette goutte 21 en unité arbitraire en fonction du temps en minutes, et est représentative de la croissance des levures dans cette goutte 21 au cours du temps. Cette courbe est extraite à partir d'un analyse des images bidimensionnelles de l'émulsion en fonction du temps. La figure 11 comprend en outre une interpolation exponentielle 27 de cette courbe, qui donne accès à un temps moyen de division de 100 minutes.

En cumulant de telles données 26, 27 pour chacune des gouttes de l'émulsion, le procédé selon l'invention permet bien sur de calculer un temps moyen de division des levures, mais aussi une distribution statistique de ces temps. L'invention permet donc de suivre dans le temps en parallèle un très grand nombre d'événements bien contrôlés se déroulants dans des gouttes figées à des positions bien déterminées.

Bien sûr, l'invention n'est pas limitée aux exemples qui viennent d'être décrits et de nombreux aménagements peuvent être apportés à ces exemples sans sortir du cadre de l'invention.

En particulier, la micropipette 18 du dispositif 1 peut être remplacée par tout autre dispositif de micromanipulation connu de l'homme du métier.

En outre dans une variante, la micropipette 18 ou tout autre dispositif de micromanipulation la remplaçant est immobile, et la platine 19 déplace la lame 15 relativement au dispositif de micromanipulation 18.

Finalement, les premier et deuxième modes de réalisation de procédé selon l'invention précédemment décrits sont compatibles : il est en effet possible de figer des gouttes 21 d'une émulsion formant un réseau bidimensionnel compact ou semi compact de gouttes en solidifiant une phase continue 23 qui entoure ces gouttes 21.

## Revendications

1. Procédé de lecture d'une émulsion comprenant :
- une acquisition d'images partielles de l'émulsion au cours d'au moins un balayage de l'émulsion (3) par un système optique (4), dans lequel les gouttes (21,22) de l'émulsion (3) ne bougent pas pendant le balayage,
- une construction d'une image (24) de l'émulsion (3) à partir des images partielles de l'émulsion (3) acquises au cours dudit au moins un balayage, **caractérisé en ce que** :
- l'émulsion (3) comprend des gouttes d'eau (21, 22) et une phase continue d'huile (23) qui entoure les gouttes (21,22),
- les gouttes de l'émulsion (3) forment un solide colloïdal,
- ledit balayage de l'émulsion est bidimensionnel et ladite image (24) est bidimensionnelle,
pour l'extraction d'informations à partir de cette émulsion,
chaque goutte constituant un réservoir isolé des autres gouttes et pouvant jouer le rôle de microréacteurs biologiques ou pouvant contenir des cellules ou des molécules spécifiques, et
le procédé de lecture comprenant en outre un suivi dans le temps d'une réaction chimique ou biologique se déroulant dans au moins une des gouttes, ledit suivi comprenant une réitération des étapes de balayage et de construction.

2. Procédé de lecture d'une émulsion comprenant :
- une acquisition d'images partielles de l'émulsion au cours d'au moins un balayage de l'émulsion (3) par un système optique (4), dans lequel les gouttes(21,22) de l'émulsion ne bougent pas pendant le balayage,
- une construction d'une image (24) de l'émulsion (3) à partir des images partielles de l'émulsion (3) acquises au cours dudit au moins un balayage,
**caractérisée en ce que** :
- l'émulsion (3) comprenant des gouttes d'eau (21, 22) et une phase continue d'huile (23) qui entoure les gouttes (21,22),
- les gouttes de l'émulsion (3) stockée dans un logement forment une monocouche de gouttes, dans laquelle chaque goutte est enserrée entre deux lames parallèles (14) et (15) durant le balayage de l'émulsion, et où les gouttes de l'émulsion forment un solide colloïdal,
- ledit balayage de l'émulsion est bidimensionnel et ladite image (24) est bidimensionnelle,
pour l'extraction d'informations à partir de cette émulsion, chaque goutte constituant un réservoir isolé des autres gouttes et pouvant jouer le rôle de microréacteurs biologiques ou pouvant contenir des cellules ou des molécules spécifiques, et
le procédé de lecture comprenant en outre un suivi dans le temps d'une réaction chimique ou biologique se déroulant dans au moins une des gouttes, ledit suivi comprenant une réitération des étapes de balayage et de construction.

3. Procédé de lecture d'une émulsion comprenant :
- une acquisition d'images partielles de l'émulsion au cours d'au moins un balayage de l'émulsion (3) par un système optique (4), dans lequel les gouttes (21,22) de l'émulsion (3) ne bougent pas pendant le balayage
- une construction d'une image bidimensionnelle (24) de l'émulsion (3) à partir des images partielles de l'émulsion (3) acquises au cours dudit au moins un balayage,
**caractérisé en ce que** :
- l'émulsion (3) comprend des gouttes d'eau (21, 22) et une phase continue d'huile (23) qui entoure les gouttes (21,22),
- la phase continue (23) est solide lors du balayage,
- ledit balayage de l'émulsion est bidimensionnel et ladite image (24) est bidimensionnelle,
pour l'extraction d'informations à partir de cette émulsion, chaque goutte constituant un réservoir isolé des autres gouttes et pouvant jouer le rôle de microréacteurs biologiques ou pouvant contenir des cellules ou des molécules spécifiques, et
le procédé de lecture comprenant en outre un suivi dans le temps d'une réaction chimique ou biologique se déroulant dans au moins une des gouttes, le dit suivi comprenant une réitération des étapes de balayage et de construction.

4. Procédé selon l'une quelconque des revendications 1 à 3, **caractérisé en ce que** la fraction volumique des gouttes dans l'émulsion (3) est supérieure ou égale à 40%.

5. Procédé selon l'une quelconque des revendications 1 à 3, **caractérisé en ce que** la fraction volumique des gouttes dans l'émulsion (3) est supérieure ou égale à 60%.

6. Procédé selon l'une des revendications 2, 4 à 5, **caractérisée en ce que** logement (2) a une épaisseur verticale séparant les lames (14) et (15) inférieure au diamètre moyen des gouttes (21) non contraintes.

7. Procédé selon la revendications 3, **caractérisé en ce que** la phase continue (23) a une température de liquéfaction supérieure à 37°C, de préférence supérieure à 40°C, plus précisément de préférence supérieure à 50°C.

8. Procédé selon l'une quelconque des revendications 3 ou 7, **caractérisé en ce que** durant le balayage de l'émulsion (3), l'émulsion (3) est maintenue à une température inférieure à la température de liquéfaction de la phase continue (23).

9. Procédé selon l'une quelconque des revendications précédentes, **caractérisé en ce que** la phase continue (23) comprend un surfactant.

10. Procédé selon l'une quelconques des revendications 1, 3 à 9, **caractérisé en ce que** l'émulsion (3) est étalée de manière à avoir une épaisseur comprise entre 1 et 100 couches de gouttes.

11. Procédé selon l'une des revendications 1 à 10, **caractérisé en ce que** l'émulsion (3) est étalée sous la forme d'une monocouche de gouttes.

12. Procédé selon l'une des revendications 1 à 11, **caractérisé en ce que** durant le balayage de l'émulsion (3), l'émulsion (3) est stockée dans un logement (2).

13. Procédé selon l'une des revendications 2, 6 ou 12, **caractérisé en ce que** durant le balayage de l'émulsion (3), le logement (2) est maintenu à une température sensiblement constante, de préférence avec une précision de plus ou moins 0,1°C.

14. Procédé selon l'une des revendications 2, 6, 12 ou 13, **caractérisé en ce que** le logement (2) comprend une paroi plane qui durant le balayage de l'émulsion est en contact avec l'émulsion (3) et est disposée horizontalement avec une dénivellation verticale inférieure à 5 micromètres sur une distance horizontale de 2 centimètres.

15. Procédé selon l'une quelconque des revendications 12 à 14, **caractérisé en ce que** le logement (2) comprend deux surfaces sensiblement parallèles qui durant le balayage de l'émulsion enserrent chacune des gouttes.

16. Procédé selon l'une quelconque des revendications 1 à 15, **caractérisé en ce qu'**il comprend en outre une localisation de gouttes (22) comprenant un type donné de molécule ou de cellule par analyse de l'image bidimensionnelle (24) de l'émulsion (3).

17. Procédé selon la revendication 16, **caractérisé en ce que** la localisation comprend une utilisation d'un algorithme de seuillage et segmentation sur l'image bidimensionnelle.

18. Procédé selon la revendication 16 ou 17, **caractérisé en ce qu'**il comprend en outre un prélèvement des gouttes (22) comprenant le type donné de molécule ou de cellule.

19. Procédé selon la revendication 18, **caractérisé en ce que** le prélèvement comprend :
- un déplacement d'une extrémité d'une micropipette (18) à des coordonnées où a été localisée une goutte (22) comprenant le type donné de molécule ou de cellule, et
- une aspiration de cette goutte (22) par la micropipette (18).

20. Procédé selon l'une quelconque des revendications 1 à 19, **caractérisé en ce qu'**il comprend en outre un dénombrement de gouttes (22) comprenant un type donné de molécule ou de cellule par analyse de l'image bidimensionnelle (24) de l'émulsion (3).

21. Procédé selon la revendication 20, **caractérisé en ce que** le dénombrement comprend une utilisation d'un algorithme de seuillage et segmentation sur l'image bidimensionnelle.

22. Procédé selon l'une quelconque des revendications 1 à 21, **caractérisé en ce que** la construction de l'image bidimensionnelle comprend au cours du balayage :
- une projection de différentes images partielles de l'émulsion via le système optique (4) sur un détecteur (11),
- une combinaison des différentes images partielles de l'émulsion acquises par le détecteur (11).

23. Procédé selon la revendication 22, **caractérisé en ce que** les images partielles sont des images de signaux de fluorescence émis par l'émulsion.

24. Procédé selon l'une quelconque des revendications 1 à 23, **caractérisé en ce que** l'émulsion (3) est une émulsion inverse de gouttes d'eau (21, 22) dans de l'huile (23).

25. Procédé selon l'une quelconque des revendications 2, 10 ou 11, **caractérisé en ce que** le système optique (4) a une profondeur de champ sensiblement égale ou supérieure à l'épaisseur de l'émulsion (3) étalée.

26. Procédé selon l'une quelconque des revendications 1 à 25, **caractérisé en ce qu'**il comprend en outre :
- un placement de l'émulsion (3) entre deux lames (14, 15) parallèles dont une (15) au moins est transparente (24),
- un mouvement de cisaillement entre les deux lames (14, 15) jusqu'à ce que de l'émulsion (3) soit monodispersée.

27. Dispositif de lecture d'une émulsion (3) de gouttes d'eau dans une phase continue d'huile comprenant des gouttes (21, 22) et une phase continue (23) qui entoure les gouttes (21,22), ledit dispositif comprenant :
- un logement (2) pour recevoir l'émulsion (3),
- un système optique (4), dont la caméra 11 acquiert des images partielles de l'émulsion,
- des moyens (5) pour effectuer un balayage bidimensionnel de l'émulsion (3) par le système optique (4),
**caractérisé en ce qu'**il comprend :
- des moyens (6) pour construire une image bidimensionnelle (24) de l'émulsion à partir des images partielles acquises au cours du balayage bidimensionnel de l'émulsion,
- des moyens pour figer les gouttes lors du balayage,
pour l'extraction d'informations à partir de cette émulsion, chaque goutte constituant un réservoir isolé des autres gouttes et pouvant jouer le rôle de microréacteurs biologiques ou pouvant contenir des cellules ou des molécules spécifiques et
le dispositif comprend en outre des moyens pour suivre dans le temps une réaction chimique ou biologique se déroulant dans au moins une des gouttes, ledit suivi comprenant une réitération des étapes de balayage et de construction.

28. Dispositif selon la revendication 27, **caractérisé en ce que** le logement (2) est agencé pour que l'émulsion (3) soit étalée de manière à avoir une épaisseur comprise entre 1 et 100 couches de gouttes (21, 22).

29. Dispositif selon l'une quelconque des revendications 27 ou 28, **caractérisé en ce que** le logement (2) a une épaisseur verticale de sorte que l'émulsion (3) soit étalée sous la forme d'une monocouche de gouttes.

30. Dispositif selon l'une quelconque des revendications 27 à 29, **caractérisé en ce qu'**il comprend des moyens (17) pour maintenir l'émulsion (3) à une température inférieure à la température de liquéfaction de la phase continue durant le balayage de l'émulsion.

31. Dispositif selon l'une quelconque des revendications 27 à 30, **caractérisé en ce qu'**il comprend des moyens pour fabriquer l'émulsion agencés pour que les gouttes de l'émulsion forment un réseau bidimensionnel de gouttes, ayant de préférence une fraction volumique de gouttes dans l'émulsion supérieure ou égale à 40%, plus précisément de préférence supérieure ou égale à 60%, et formant de préférence un solide colloïdal.

32. Dispositif selon la revendication 31, **caractérisé en ce que** les moyens de fabrication comprennent une chambre de crémage (25) ou de sédimentation des gouttes et des moyens pour prélever dans ladite chambre des gouttes diluées dans la phase continue selon une fraction volumique de gouttes donnée.

33. Dispositif selon l'une quelconque des revendications 27 à 32, **caractérisé en ce qu'**il comprend des moyens pour maintenir le logement à une température sensiblement constante durant le balayage de l'émulsion, de préférence avec une précision de plus ou moins 0,1°C.

34. Dispositif selon l'une quelconque des revendications 27 à 32, **caractérisé en ce que** le logement comprend une paroi plane agencée pour être en contact avec l'émulsion durant le balayage de l'émulsion et disposée horizontalement avec une dénivellation verticale inférieure à 5 micromètres sur une distance horizontale de 2 centimètres.

35. Dispositif selon l'une quelconque des revendications 27 à 34, **caractérisé en ce que** le logement comprend deux surfaces sensiblement parallèles agencées pour enserrer chacune des gouttes durant le balayage de l'émulsion.

36. Dispositif selon l'une quelconque des revendications 27 à 35, **caractérisé en ce qu'**il comprend en outre des moyens (6) pour localiser des gouttes (22) comprenant un type donné de molécule ou de cellule, les moyens de localisation comprenant des moyens d'analyse de l'image bidimensionnelle (24) de l'émulsion.

37. Dispositif selon la revendication 36, **caractérisé en ce qu'**il comprend des moyens (18, 19) pour prélever des gouttes (22) comprenant le type donné de molécule ou de cellule.

38. Dispositif selon la revendication 37, **caractérisé en ce que** les moyens de prélèvement comprennent :
- une micropipette (18),
- des moyens (19) pour déplacer une extrémité de la micropipette à des coordonnées d'une goutte (22) comprenant le type donné de molécule ou de cellule et localisée par les moyens de localisation (6), et
- des moyens pour aspirer cette goutte par la micropipette.

39. Dispositif selon l'une quelconque des revendications 27 à 38, **caractérisé en ce qu'**il comprend en outre des moyens (6) pour dénombrer des gouttes (22) comprenant un type donné de molécule ou de cellule, les moyens de dénombrement comprenant des moyens d'analyse de l'image bidimensionnelle (24) de l'émulsion.

40. Dispositif selon l'une quelconque des revendications 27 à 39, **caractérisé en ce que** les moyens de construction de l'image bidimensionnelle comprennent :
- un détecteur (11) sur laquelle le système optique (4) est agencé pour projeter différentes images partielles de l'émulsion (3) au cours d'un balayage,
- des moyens (6) pour combiner les différentes images partielles de l'émulsion acquises par le détecteur (11) au cours du balayage.

41. Dispositif selon les revendications 28 ou 29, **caractérisé en ce que** le système optique (4) a une profondeur de champ sensiblement égale ou supérieure à l'épaisseur de l'émulsion étalée (3).

42. Dispositif selon l'une quelconque des revendications 27 à 41, **caractérisé en ce que** le logement (2) comprend deux lames parallèles (14, 15) dont une (15) au moins est transparente, et des moyens (16) pour appliquer un mouvement de cisaillement entre les deux lames (14, 15) jusqu'à ce que l'émulsion (3) soit monodisperse.

## Patentansprüche

1. Verfahren zum Untersuchen einer Emulsion, umfassend:
- eine Aufnahme von Teilbildern der Emulsion während mindestens einer Abtastung der Emulsion (3) durch ein optisches System (4), in dem sich die Tropfen (21, 22) der Emulsion (3) während der Abtastung nicht bewegen,
- eine Konstruktion eines Bildes (24) der Emulsion (3) aus den Teilbildern der Emulsion (3), die während der mindestens einen Abtastung aufgenommen wurden, **dadurch gekennzeichnet, dass**:
- die Emulsion (3) Wassertropfen (21, 22) und eine kontinuierliche Ölphase (23), die die Tropfen (21, 22) umgibt, umfasst,
- die Tropfen der Emulsion (3) einen kolloidalen Feststoff bilden,
- die Abtastung der Emulsion zweidimensional ist, und das Bild (24) zweidimensional ist,
für das Extrahieren von Informationen aus dieser Emulsion,
wobei jeder Tropfen ein von den anderen Tropfen getrenntes Reservoir bildet und die Rolle von biologischen Mikroreaktoren spielen kann und Zellen oder spezifische Moleküle enthalten kann, und
wobei das Untersuchungsverfahren ferner eine zeitliche Kontrolle einer chemischen oder biologischen Reaktion umfasst, die in mindestens einem der Tropfen abläuft, wobei die Kontrolle eine Reiteration der Abtastungs- und Konstruktionsschritte umfasst.

2. Verfahren zum Untersuchen einer Emulsion, umfassend:
- eine Aufnahme von Teilbildern der Emulsion während mindestens einer Abtastung der Emulsion (3) durch ein optisches System (4), in dem sich die Tropfen (21, 22) der Emulsion während der Abtastung nicht bewegen,
- eine Konstruktion eines Bildes (24) der Emulsion (3) aus den Teilbildern der Emulsion (3), die während der mindestens einen Abtastung aufgenommen wurden, **dadurch gekennzeichnet, dass**:
- die Emulsion (3) Wassertropfen (21, 22) und eine kontinuierliche Ölphase (23), die die Tropfen (21, 22) umgibt, umfasst,
- die Tropfen der Emulsion (3), die in einem Behältnis gelagert ist, eine Monoschicht von Tropfen bilden, in der jeder Tropfen zwischen zwei parallelen Plättchen (14) und (15) während der Abtastung der Emulsion eingespannt ist, und wo die Tropfen der Emulsion einen kolloidalen Feststoff bilden,
- die Abtastung der Emulsion zweidimensional ist, und das Bild (24) zweidimensional ist,
für das Extrahieren von Informationen aus dieser Emulsion,
wobei jeder Tropfen ein von den anderen Tropfen getrenntes Reservoir bildet und die Rolle von biologischen Mikroreaktoren spielen kann und Zellen oder spezifische Moleküle enthalten kann, und
wobei das Untersuchungsverfahren ferner eine zeitliche Kontrolle einer chemischen oder biologischen Reaktion umfasst, die in mindestens einem der Tropfen abläuft, wobei die Kontrolle eine Reiteration der Abtastungs- und Konstruktionsschritte umfasst.

3. Verfahren zum Untersuchen einer Emulsion, umfassend:
- eine Aufnahme von Teilbildern der Emulsion während mindestens einer Abtastung der Emulsion (3) durch ein optisches System (4), in dem sich die Tropfen (21, 22) der Emulsion (3) während der Abtastung nicht bewegen,
- eine Konstruktion eines zweidimensionalen Bildes (24) der Emulsion (3) aus den Teilbildern der Emulsion (3), die während der mindestens einen Abtastung aufgenommen wurden,
**dadurch gekennzeichnet, dass**:
- die Emulsion (3) Wassertropfen (21, 22) und eine kontinuierliche Ölphase (23), die die Tropfen (21, 22) umgibt, umfasst,
- die kontinuierliche Phase (23) während der Abtastung fest ist,
- die Abtastung der Emulsion zweidimensional ist, und das Bild (24) zweidimensional ist,
für das Extrahieren von Informationen aus dieser Emulsion,
wobei jeder Tropfen ein von den anderen Tropfen getrenntes Reservoir bildet und die Rolle von biologischen Mikroreaktoren spielen kann und Zellen oder spezifische Moleküle enthalten kann, und
wobei das Untersuchungsverfahren ferner eine zeitliche Kontrolle einer chemischen oder biologischen Reaktion umfasst, die in mindestens einem der Tropfen abläuft, wobei die Kontrolle eine Reiteration der Abtastungs- und Konstruktionsschritte umfasst.

4. Verfahren nach einem der Ansprüche 1 bis 3, **dadurch gekennzeichnet, dass** der Volumenanteil der Tropfen in der Emulsion (3) größer oder gleich 40 % ist.

5. Verfahren nach einem der Ansprüche 1 bis 3, **dadurch gekennzeichnet, dass** der Volumenanteil der Tropfen in der Emulsion (3) größer oder gleich 60 % ist.

6. Verfahren nach einem der Ansprüche 2, 4 bis 5, **dadurch gekennzeichnet, dass** das Behältnis (2) eine vertikale Dicke, die die Plättchen (14) und (15) trennt, hat, die kleiner als der durchschnittliche Durchmesser der nicht eingespannten Tropfen (21) ist.

7. Verfahren nach Anspruch 3, **dadurch gekennzeichnet, dass** die kontinuierliche Phase (23) eine Verflüssigungstemperatur von über 37 °C, vorzugsweise über 40 °C, genauer vorzugsweise über 50 °C hat.

8. Verfahren nach einem der Ansprüche 3 oder 7, **dadurch gekennzeichnet, dass** während der Abtastung der Emulsion (3) die Emulsion (3) auf einer Temperatur unter der Verflüssigungstemperatur der kontinuierlichen Phase (23) gehalten wird.

9. Verfahren nach einem der vorhergehenden Ansprüche, **dadurch gekennzeichnet, dass** die kontinuierliche Phase (23) ein Tensid umfasst.

10. Verfahren nach einem der vorhergehenden Ansprüche 1, 3 bis 9, **dadurch gekennzeichnet, dass** die Emulsion (3) ausgebreitet wird, um eine Dicke zwischen 1 und 100 Tropfenschichten zu erhalten.

11. Verfahren nach einem der Ansprüche 1 bis 10, **dadurch gekennzeichnet, dass** die Emulsion (3) in Form einer Monoschicht von Tropfen ausgebreitet wird.

12. Verfahren nach einem der Ansprüche 1 bis 11, **dadurch gekennzeichnet, dass** während der Abtastung der Emulsion (3) die Emulsion (3) in einem Behältnis (2) gelagert wird.

13. Verfahren nach einem der Ansprüche 2, 6 oder 12, **dadurch gekennzeichnet, dass** während der Abtastung der Emulsion (3) das Behältnis (2) auf einer im Wesentlichen konstanten Temperatur, vorzugsweise mit einer Genauigkeit von mehr oder weniger 0,1 °C, gehalten wird.

14. Verfahren nach einem der Ansprüche 2, 6, 12 oder 13, **dadurch gekennzeichnet, dass** das Behältnis (2) eine ebene Wand umfasst, die während der Abtastung der Emulsion mit der Emulsion (3) in Kontakt ist und horizontal mit einem vertikalen Höhenunterschied von weniger als 5 Mikrometer über eine horizontale Distanz von 2 Zentimetern angeordnet ist.

15. Verfahren nach einem der Ansprüche 12 bis 14, **dadurch gekennzeichnet, dass** das Behältnis (2) zwei im Wesentlichen parallele Flächen umfasst, die während der Abtastung der Emulsion jeden der Tropfen einspannen.

16. Verfahren nach einem der Ansprüche 1 bis 15, **dadurch gekennzeichnet, dass** es ferner eine Lokalisierung von Tropfen (22), umfassend einen gegebenen Molekül- oder Zelltyp, durch Analyse des zweidimensionalen Bildes (24) der Emulsion (3) umfasst.

17. Verfahren nach Anspruch 16, **dadurch gekennzeichnet, dass** die Lokalisierung eine Verwendung eines Schwellenwert- und Segmentierungsalgorithmus am zweidimensionalen Bild umfasst.

18. Verfahren nach Anspruch 16 oder 17, **dadurch gekennzeichnet, dass** es ferner eine Entnahme von Tropfen (22), umfassend den gegebenen Molekül- oder Zelltyp, umfasst.

19. Verfahren nach Anspruch 18, **dadurch gekennzeichnet, dass** die Entnahme umfasst:
- eine Verlagerung eines Endes einer Mikropipette (18) zu Koordinaten, wo ein Tropfen (22), umfassend den gegebenen Molekül- oder Zelltyp, lokalisiert wurde, und
- ein Ansaugen dieses Tropfens (22) durch die Mikropipette (18).

20. Verfahren nach einem der Ansprüche 1 bis 19, **dadurch gekennzeichnet, dass** es ferner eine Zählung von Tropfen (22), umfassend einen gegebenen Molekül- oder Zelltyp, durch Analyse des zweidimensionalen Bildes (24) der Emulsion (3) umfasst.

21. Verfahren nach Anspruch 20, **dadurch gekennzeichnet, dass** die Zählung eine Verwendung eines Schwellenwert- und Segmentierungsalgorithmus am zweidimensionalen Bild umfasst.

22. Verfahren nach einem der Ansprüche 1 bis 21, **dadurch gekennzeichnet, dass** die Konstruktion des zweidimensionalen Bildes während der Abtastung umfasst:
- eine Projektion verschiedener Teilbilder der Emulsion über das optische System (4) auf einen Detektor (11),
- eine Kombination der verschiedenen Teilbilder der Emulsion, die vom Detektor (11) erfasst wurden.

23. Verfahren nach Anspruch 22, **dadurch gekennzeichnet, dass** die Teilbilder Bilder von Fluoreszenzsignalen sind, die von der Emulsion entsandt werden.

24. Verfahren nach einem der Ansprüche 1 bis 23, **dadurch gekennzeichnet, dass** die Emulsion (3) eine inverse Emulsion von Wassertropfen (21, 22) in Öl (23) ist.

25. Verfahren nach einem der Ansprüche 2, 10 oder 11, **dadurch gekennzeichnet, dass** das optische System (4) eine Tiefenschärfe im Wesentlichen gleich oder größer als die Dicke der ausgebreiteten Emulsion (3) hat.

26. Verfahren nach einem der Ansprüche 1 bis 25, **dadurch gekennzeichnet, dass** es ferner umfasst:
- eine Anordnung der Emulsion (3) zwischen zwei parallelen Plättchen (14, 15), von denen mindestens eines (15) transparent (24) ist,
- eine Scherbewegung zwischen den zwei Plättchen (14, 15), bis die Emulsion (3) monodispers ist.

27. Vorrichtung zum Untersuchen einer Emulsion (3) von Wassertropfen in einer kontinuierlichen Ölphase, umfassend Tropfen (21, 22) und eine kontinuierliche Phase (23), die die Tropfen (21, 22) umgibt, wobei die Vorrichtung umfasst:
- ein Behältnis (2) für die Aufnahme der Emulsion (3),
- ein optisches System (4), dessen Kamera 11 Teilbilder der Emulsion aufnimmt,
- Mittel (5), um eine zweidimensionale Abtastung der Emulsion (3) durch das optische System (4) durchzuführen,
**dadurch gekennzeichnet, dass** sie umfasst:
- Mittel (6), um ein zweidimensionales Bild (24) der Emulsion aus Teilbildern, die während der zweidimensionalen Abtastung der Emulsion aufgenommen wurden, zu konstruieren,
- Mittel, um die Tropfen bei der Abtastung zu fixieren, für das Extrahieren von Informationen aus dieser Emulsion,
wobei jeder Tropfen ein von den anderen Tropfen getrenntes Reservoir bildet und die Rolle von biologischen Mikroreaktoren spielen kann und Zellen oder spezifische Moleküle enthalten kann, und
wobei die Vorrichtung ferner Mittel für eine zeitliche Kontrolle einer chemischen oder biologischen Reaktion umfasst, die in mindestens einem der Tropfen abläuft, wobei die Kontrolle eine Reiteration der Abtastungs- und Konstruktionsschritte umfasst.

28. Vorrichtung nach Anspruch 27, **dadurch gekennzeichnet, dass** das Behältnis (2) dazu vorgesehen ist, dass die Emulsion (3) derart ausgebreitet wird, dass sie eine Dicke zwischen 1 und 100 Tropfenschichten (21, 22) hat.

29. Vorrichtung nach einem der Ansprüche 27 oder 28, **dadurch gekennzeichnet, dass** das Behältnis (2) eine derartige vertikale Dicke hat, dass die Emulsion (3) in Form einer Monoschicht von Tropfen ausgebreitet wird.

30. Vorrichtung nach einem der Ansprüche 27 bis 29, **dadurch gekennzeichnet, dass** sie Mittel (17) umfasst, um die Emulsion (3) auf einer Temperatur unter der Verflüssigungstemperatur der kontinuierlichen Phase während der Abtastung der Emulsion zu halten.

31. Vorrichtung nach einem der Ansprüche 27 bis 30, **dadurch gekennzeichnet, dass** sie Mittel, um die Emulsion herzustellen, umfasst, die dazu vorgesehen sind, dass die Tropfen der Emulsion ein zweidimensionales Netz von Tropfen bilden, das vorzugsweise einen Volumenanteil von Tropfen in der Emulsion größer oder gleich 40 %, genauer vorzugsweise größer oder gleich 60 %, hat und vorzugsweise einen kolloidalen Feststoff bildet.

32. Vorrichtung nach Anspruch 31, **dadurch gekennzeichnet, dass** die Herstellungsmittel eine Kammer (25) zum Eindicken oder Sedimentieren der Tropfen und Mittel umfasst, um aus der Kammer Tropfen, die in der kontinuierlichen Phase verdünnt wurden, nach einem gegebenen Volumenanteil von Tropfen zu entnehmen.

33. Vorrichtung nach einem der Ansprüche 27 bis 32, **dadurch gekennzeichnet, dass** sie Mittel umfasst, um das Behältnis auf einer im Wesentlichen konstanten Temperatur während der Abtastung der Emulsion zu halten, vorzugsweise mit einer Genauigkeit von mehr oder weniger 0,1 °C.

34. Vorrichtung nach einem der Ansprüche 27 bis 32, **dadurch gekennzeichnet, dass** das Behältnis eine ebene Wand umfasst, die dazu vorgesehen ist, mit der Emulsion während der Abtastung der Emulsion in Kontakt zu sein, und die horizontal mit einem vertikalen Höhenunterschied unter 5 Mikrometer über einen Horizontalabstand von 2 Zentimeter angeordnet ist.

35. Vorrichtung nach einem der Ansprüche 27 bis 34, **dadurch gekennzeichnet, dass** das Behältnis zwei im Wesentlichen parallele Flächen umfasst, die dazu vorgesehen sind, jeden der Tropfen während der Abtastung der Emulsion einzuspannen.

36. Vorrichtung nach einem der Ansprüche 27 bis 35, **dadurch gekennzeichnet, dass** sie ferner Mittel (6) umfasst, um Tropfen (22), umfassend einen gegebenen Molekül- oder Zelltyp, zu lokalisieren, wobei die Lokalisierungsmittel Mittel zur Analyse des zweidimensionalen Bildes (24) der Emulsion umfassen.

37. Vorrichtung nach Anspruch 36, **dadurch gekennzeichnet, dass** sie Mittel (18, 19) umfasst, um Tropfen (22), umfassend den gegebenen Molekül- oder Zelltyp, zu entnehmen.

38. Vorrichtung nach Anspruch 37, **dadurch gekennzeichnet, dass** die Entnahmemittel umfassen:
- eine Mikropipette (18),
- Mittel (19), um ein Ende der Mikropipette an Koordinaten eines Tropfens (22), umfassend den gegebenen Molekül- oder Zelltyp und lokalisiert durch die Lokalisierungsmittel (6) zu verlagern, und
- Mittel, um diesen Tropfen durch die Mikropipette anzusaugen.

39. Vorrichtung nach einem der Ansprüche 27 bis 38, **dadurch gekennzeichnet, dass** sie ferner Mittel (6) umfasst, um Tropfen (22), umfassend einen gegebenen Molekül- oder Zelltyp, zu zählen, wobei die Zählmittel Mittel zur Analyse des zweidimensionalen Bildes (24) der Emulsion umfassen.

40. Vorrichtung nach einem der Ansprüche 27 bis 39, **dadurch gekennzeichnet, dass** die Mittel zur Konstruktion des zweidimensionalen Bildes umfassen:
- einen Detektor (11), auf dem das optische System (4) angeordnet ist, um verschiedene Teilbilder der Emulsion (3) während einer Abtastung zu projizieren,
- Mittel (6), um die verschiedenen Teilbilder der Emulsion, die vom Detektor (11) während der Abtastung aufgenommen wurden, zu kombinieren.

41. Vorrichtung nach den Ansprüchen 28 oder 29, **dadurch gekennzeichnet, dass** das optische System (4) eine Tiefenschärfe im Wesentlichen gleich oder größer als die Dicke der ausgebreiteten Emulsion (3) hat.

42. Vorrichtung nach einem der Ansprüche 27 bis 41, **dadurch gekennzeichnet, dass** das Behältnis (2) zwei parallele Plättchen (14, 15), von denen mindestens eines (15) transparent ist, und Mittel (16) umfasst, um eine Scherbewegung zwischen den zwei Plättchen (14, 15) anzuwenden, bis die Emulsion (3) monodispers ist.

## Claims

1. Method for reading an emulsion comprising:
- acquiring partial images of the emulsion during at least one scanning of the emulsion (3) by an optical system (4), in which the droplets (21,22) of the emulsion (3) do not move during scanning,
- constructing an image (24) of the emulsion (3) from the partial images of the emulsion (3) acquired during said at least one scanning,
**characterized in that**:
- the emulsion (3) comprises water droplets (21, 22) and a continuous phase of oil (23) that surrounds the droplets (21,22),
- the droplets of the emulsion (3) form a colloidal solid,
- said scanning of the emulsion is two-dimensional and said image (24) is two-dimensional,
for the extraction of information from this emulsion,
each droplet constituting a reservoir isolated from the other droplets and which may act as biological microreactors or may contain specific cells or molecules, and
the method for reading also comprising a time-based monitoring of a chemical or biological reaction taking place in at least one of the droplets, said monitoring comprising a repetition of the scanning and construction steps.

2. Method for reading an emulsion comprising:
- acquiring partial images of the emulsion during at least one scanning of the emulsion (3) by an optical system (4), in which the droplets (21,22) of the emulsion do not move during scanning,
- constructing an image (24) of the emulsion (3) from the partial images of the emulsion (3) acquired during said at least one scanning,
**characterized in that**:
- the emulsion (3) comprising water droplets (21, 22) and a continuous phase of oil (23) that surrounds the droplets (21,22),
- the droplets of the emulsion (3) stored in a receptacle form a monolayer of droplets, in which each droplet is enclosed between two parallel plates (14) and (15) during the scanning of the emulsion, and where the droplets of the emulsion form a colloidal solid,
- said scanning of the emulsion is two-dimensional and said image (24) is two-dimensional,
for the extraction of information from this emulsion, each droplet constituting a reservoir isolated from the other droplets and which may act as biological microreactors or which may contain specific cells or molecules, and
the method for reading also comprising a time-based monitoring of a chemical or biological reaction taking place in at least one of the droplets, said monitoring including a repetition of the scanning and construction steps.

3. Method for reading an emulsion comprising:
- acquiring partial images of the emulsion during at least one scanning of the emulsion (3) by an optical system (4), in which the droplets (21,22) of the emulsion (3) do not move during scanning
- constructing a two-dimensional image (24) of the emulsion (3) from the partial images of the emulsion (3) acquired during said at least one scanning,
**characterized in that**:
- the emulsion (3) includes water droplets (21, 22) and a continuous phase of oil (23) that surrounds the droplets (21,22),
- the continuous phase (23) is solid during scanning,
- said scanning of the emulsion is two-dimensional and said image (24) is two-dimensional,
for the extraction of information from this emulsion, each drop constituting a reservoir isolated from the other droplets and which may act as biological microreactors or which may contain specific cells or molecules, and
the method for reading also comprising a time-based monitoring of a chemical or biological reaction taking place in at least one of the droplets, said **monitoring** including a repetition of the scanning and construction steps.

4. A method according to any one of claims 1 to 3, **characterized in that** the volume fraction of the droplets in the emulsion (3) is greater than or equal to 40%.

5. A method according to any one of claims 1 to 3, **characterized in that** the volume fraction of the droplets in the emulsion (3) is greater than or equal to 60%.

6. A method according to **any** one of claims 2, 4 to 5, **characterized in that** the receptacle (2) has a vertical thickness separating the plates (14) and (15) less than the average diameter of the unstressed droplets (21).

7. A method according to claims 3, **characterized in that** the continuous phase (23) has a melting point greater than 37°C, preferably greater than 40°C, more precisely preferably greater than 50°C.

8. A method according to any one of claims 3 or 7, **characterized in that** during the scanning of the emulsion (3), the emulsion (3) is maintained at a temperature below the melting point of the continuous phase (23).

9. A method according to any one of the preceding claims, **characterized in that** the continuous phase (23) comprises a surfactant.

10. A method according to any one of claims 1, 3 to 9, **characterized in that** the emulsion (3) is spread out so as to have a thickness between 1 and 100 layers of droplets.

11. A method according to **any** one of claims 1 to 10, **characterized in that** the emulsion (3) is spread out in the form of a monolayer of droplets.

12. A method according to **any** one of claims 1 to 11, **characterized in that** during the scanning of the emulsion (3), the emulsion (3) is stored in a receptacle (2).

13. A method according to **any** one of claims 2, 6 or 12, **characterized in that** during the scanning of the emulsion (3), the receptacle (2) is maintained at a substantially constant temperature, preferably with an accuracy of plus or minus 0.1°C.

14. A method according to **any** one of claims 2, 6, 12 or 13, **characterized in that** the receptacle (2) comprises a flat wall which during scanning of the emulsion is in contact with the emulsion (3) and is arranged horizontally with a vertical difference in level of less than 5 micrometers over a horizontal distance of 2 centimeters.

15. A method according to any one of claims 12 to 14, **characterized in that** the receptacle (2) comprises two substantially parallel surfaces which during the scanning of the emulsion **hold** each of the droplets **in place.**

16. A method according to any one of claims 1 to 15, **characterized in that** it further comprises locating droplets (22) comprising a given type of molecule or cell by analyzing the two-dimensional image (24) of the emulsion (3).

17. A method according to claim 16, **characterized in that** the locating utilizes an algorithm for thresholding and segmentation of the two-dimensional image.

18. A method according to claim 16 or 17, **characterized in that** it further comprises a sampling of droplets (22) comprising the given type of molecule or cell.

19. A method according to claim 18, **characterized in that** the sampling comprises:
- moving one end of a micropipette (18) to coordinates where a droplet (22) comprising the given type of molecule or cell has been located, and
- aspirating said droplet (22) with the micropipette (18).

20. A method according to any one of claims 1 to 19, **characterized in that** it further comprises counting the droplets (22) comprising a given type of molecule or cell by analyzing the two-dimensional image (24) of the emulsion (3).

21. A method according to claim 20, **characterized in that** the counting comprises utilizing an algorithm for thresholding and segmentation of the two-dimensional image.

22. A method according to any one of claims 1 to 21, **characterized in that** constructing the two-dimensional image comprises during scanning:
- projecting different partial images of the emulsion via the optical system (4) on a detector (11),
- combining the different partial images of the emulsion acquired by the detector (11).

23. A method according to claim 22, **characterized in that** the partial images are images of fluorescence signals emitted by the emulsion.

24. A method according to any one of claims 1 to 23, **characterized in that** the emulsion (3) is an inverted emulsion of water droplets (21, 22) in oil (23).

25. A method according to any one of claims 2, 10 or 11, **characterized in that** the optical system (4) has a depth of field substantially equal to or greater than the thickness of the spread-out emulsion (3).

26. A method according to any one of claims 1 to 25, **characterized in that** it further comprises:
- placing the emulsion (3) between two parallel plates (14, 15) of which at least one (15) is transparent (24),
- applying a shearing movement between the two plates (14, 15) until emulsion (3) is monodisperse.

27. Device for reading an emulsion (3) of water droplets in a continuous phase of oil comprising droplets (21, 22) and a continuous phase (23) surrounding the droplets (21,22), said device comprising:
- a receptacle (2) to receive the emulsion (3),
- an optical system (4), of which camera (11) acquires partial images of the emulsion,
- means (5) for carrying-out two-dimensional scanning of the emulsion (3) by the optical system (4),
**characterized in that** it comprises:
- means (6) for constructing a two-dimensional image (24) of the emulsion from the partial images acquired during the two-dimensional scanning of the emulsion,
- means for freezing droplets during scanning,
for the extraction of information from this emulsion, each droplet constituting a reservoir isolated from the other droplets and which may act as biological microreactors or which may contain specific cells or molecules and
the device also includes means for a time-based monitoring of a chemical or biological reaction taking place in at least one of the droplets, said monitoring including a repetition of the scanning and construction steps.

28. Device according to claim 27, **characterized in that** the receptacle (2) is arranged so that the emulsion (3) is spread out so as to have a thickness between 1 and 100 layers of droplets (21, 22).

29. Device according to any one of claims 27 or 28, **characterized in that** the receptacle (2) has a vertical thickness so that the emulsion (3) is spread out in the form of a monolayer of droplets.

30. Device according to any one of claims 27 to 29, **characterized in that** it comprises means (17) to maintain the emulsion (3) at a temperature lower than the melting point of the continuous phase during the scanning of the emulsion.

31. Device according to any one of claims 27 to 30, **characterized in that** it comprises means for manufacturing the emulsion arranged so that the droplets of the emulsion form a two-dimensional network of droplets, preferably having a volume fraction of droplets in the emulsion greater than or equal to 40%, more precisely preferably greater than or equal to 60%, and preferably forming a colloidal solid.

32. Device according to claim 31, **characterized in that** the means for manufacturing comprise a creaming (25) or sedimentation chamber of the droplets and means for **sampling,** from said chamber, droplets diluted in the continuous phase according to a given volume fraction of droplets.

33. Device according to any one of claims 27 to 32, **characterized in that** it comprises means for maintaining the receptacle at a temperature substantially constant during the scanning of the emulsion, preferably with an accuracy of plus or minus 0.1 ° C.

34. Device according to any one of claims 27 to 32, **characterized in that** the receptacle comprises a flat wall arranged to be in contact with the emulsion during the scanning of the emulsion and arranged horizontally with a vertical difference of less than 5 micrometers over a horizontal distance of 2 centimeters.

35. Device according to any one of claims 27 to 34, **characterized in that** the receptacle comprises two substantially parallel surfaces arranged to **hold** each of the droplets **in place** during the scanning of the emulsion.

36. Device according to any one of claims 27 to 35, **characterized in that** it further comprises means (6) for locating droplets (22) comprising a given type of molecule or cell, the locating means comprising means for analyzing of the two-dimensional image (24) of the emulsion.

37. Device according to claim 36, **characterized in that** it comprises means (18, 19) for taking droplets (22) comprising the given type of molecule or cell.

38. Device according to claim 37, **characterized in that** the means of sampling include:
- a micropipette (18),
- means (19) for moving one end of the micropipette to coordinates of a drop**let** (22) comprising the given type of molecule or cell and that has been located by the locating means (6), and
- means for aspirating **said** droplet **with** the micropipette.

39. Device according to any one of claims 27 to 38, **characterized in that** it further comprises means (6) for counting droplets (22) comprising a given type of molecule or cell, **said means for counting** comprising means for analyzing the two-dimensional image (24) of the emulsion.

40. Device according to any one of claims 27 to 39, **characterized in that** the means for constructing the two-dimensional image comprise:
- a detector (11) on which the optical system (4) is **set up** for projecting different partial images of the emulsion (3) during **a scan,**
- means (6) for combining the different partial images of the emulsion acquired by the detector (11) during scanning.

41. Device according to claims 28 or 29, **characterized in that** the optical system (4) has a depth of field substantially equal to or greater than the thickness of the spread-out emulsion (3).

42. Device according to any one of claims 27 to 41, **characterized in that** the receptacle (2) comprises two parallel plates (14, 15) of which at least one (15) is transparent, and means (16) for applying a shearing movement between the two plates (14, 15) until the emulsion (3) is monodisperse.
